(19) **Europäisches Patentamt**
**European Patent Office**
**Office européen des brevets**

(11) **EP 2 416 510 A1**

(12) **EUROPEAN PATENT APPLICATION**
published in accordance with Art. 153(4) EPC

(43) Date of publication:
**08.02.2012 Bulletin 2012/06**

(51) Int Cl.:
***H04J 11/00*** *(2006.01)* ***H04B 1/707*** *(2011.01)*

(21) Application number: **10758236.3**

(22) Date of filing: **29.03.2010**

(86) International application number:
**PCT/JP2010/002231**

(87) International publication number:
**WO 2010/113456 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.03.2009 JP 2009086519**

(71) Applicant: **Panasonic Corporation Kadoma-shi Osaka 571-8501 (JP)**

(72) Inventors:
• **KASHIGAMI, Takaaki**
**2-1-61, Shiromi, Chuo-ku,**
**Osaka 540-6207 (JP)**
• **YOSHII, Isamu**
**2-1-61, Shiromi, Chuo-ku,**
**Osaka 540-6207 (JP)**

(74) Representative: **Grünecker, Kinkeldey, Stockmair & Schwanhäusser Anwaltssozietät Leopoldstrasse 4 80802 München (DE)**

(54) **BASE STATION, MOBILE STATION, PILOT TRANSMISSION METHOD, AND CHANNEL ESTIMATION METHOD**

(57) Disclosed are a base station, a mobile station, a pilot transmission method, and a channel estimation method, whereby excellent zone interference blocking characteristics can be obtained and high channel estimation precision is ensured even on a propagation path with low frequency correlation similar to when transmitting on an SFN of an MBS. A pilot symbol generating unit (110) divides a minimum resource unit, which is the minimum unit of resource allocation during MBS transmission, into a plurality of sub blocks on the basis of the correlation bandwidth corresponding to the delay spread of a propagation path in an MBS zone, and generates a pilot sequence by multiplying an orthogonal code sequence, which sets the length corresponding to the number of pilot symbols contained in each sub block as the orthogonal code length, by the pilot symbols contained in each sub block.

100

FIG.13

EP 2 416 510 A1

## Description

Technical Field

The present invention relates to a base station apparatus, a terminal apparatus, a pilot transmission method and a channel estimation method in a wireless communication system applying MBS (Multicast and Broadcast Service).

Background Art

In recent years, application of MBS (Multicast and Broadcast Service) has been promoted in various wireless communication systems (ex. 3GPP, WiMAX). A streaming distribution, etc. can be given as contents in MBS. However, further capacity increase and quality improvement are demanded in the future.

SFN (Single Frequency Network) transmission is used as an example of a technique with improved quality in MBS. In the SFN transmission, the same content is transmitted in the same physical format by synchronization of multiple base station apparatuses (BS: Base Station, abbreviated as "base station" hereinafter) in a MBS zone. Thus, owing to a macro-diversity effect, a reception quality in a terminal apparatus (MS: Mobile Station, abbreviated as "terminal" hereinafter) can be increased. A zone in which such a SFN transmission is formed as one unit, is called an "MBS zone" hereinafter.

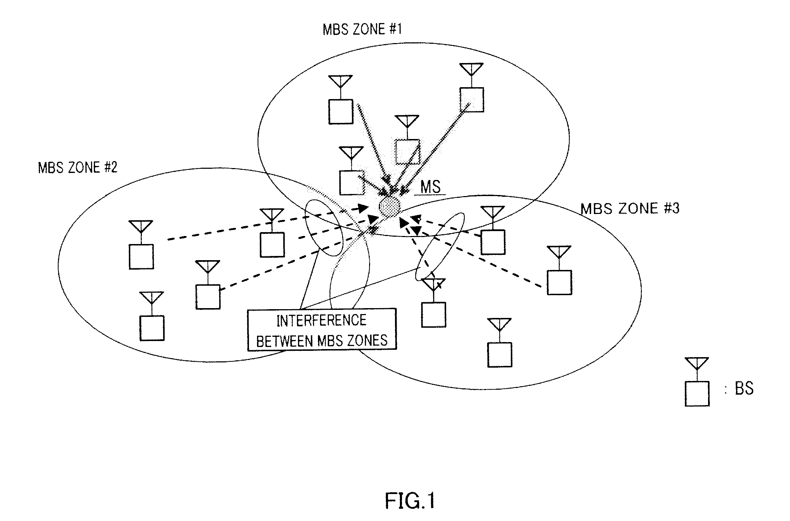

In a standardization, etc. in IEEE802.16m, usage of further multiple MBS zones is taken into consideration (called "multi-MBS zone" hereinafter). FIG.1 shows a conceptual view of the multi-MBS zone. In the multi-MBS zone, when the same frequency and a time resource are allocated to each MBS zone, a terminal receives interference between MBS zones. In this case, more interference is received at a terminal closer to an edge of the MBS zone, from other MBS zone.

In the multi-MBS zone, a MBS zone-specific pilot is examined to achieve improved channel estimation accuracy in the terminal of each MBS zone. In the MBS zone-specific pilot, the same pilot signal (the same pilot pattern) is used for the pilot transmitted from multiple BS within the MBS zone, and a different pilot signal (different pilot pattern) is used between the MBS zones. Thus, the inter-zone interference of a pilot signal (or also called "reference signal"), which is embedded for channel estimation, can be reduced. Therefore, the channel estimation accuracy for a MBS data signal of its own zone is improved, and a MBS reception performance is also improved.

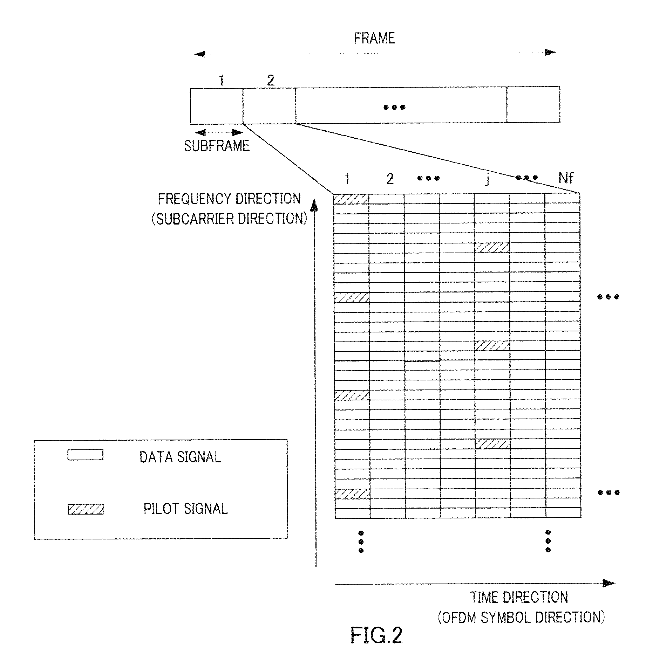

The MBS zone-specific pilot will be described hereinafter, using a mapping pattern (see FIG.2) of a data signal and a pilot signal when using OFDM modulation. Note that FIG.2 shows an OFDM signal configuration when the data signal and the pilot signal are multiplexed using FDM (Frequency Division Multiplexing) as a mapping of the data signal and the pilot signal. However, a multiplexing method is not limited to FDM, and multiplexing by other multiplexing methods is also possible, such as TDM (Time-Division-Multiplexing) and CDM (Code Division-Multiplexing).

[1] Inter-zone interlaced pilot configuration

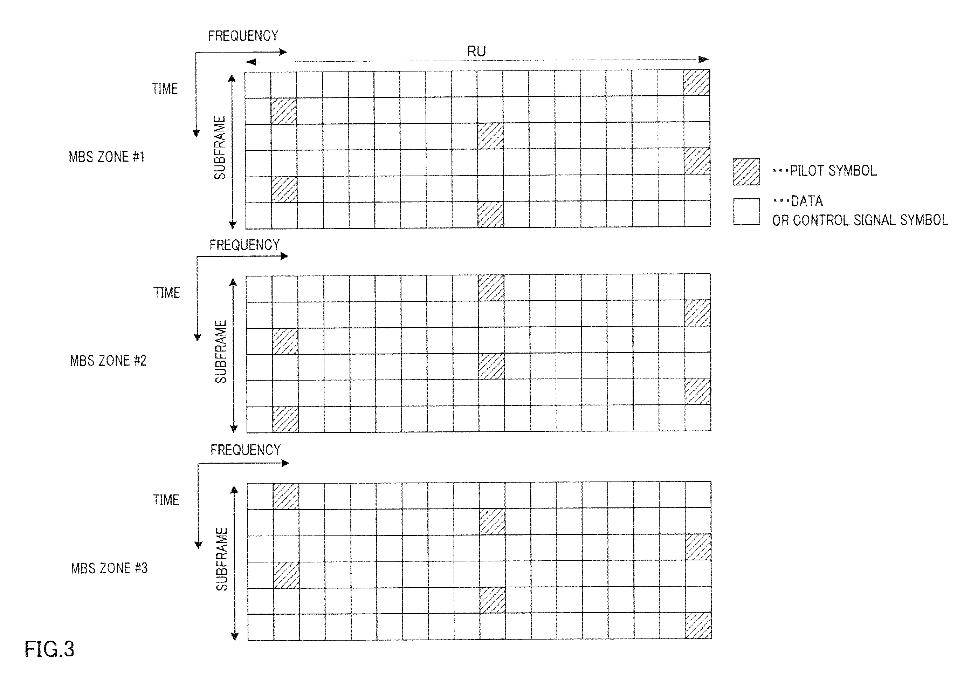

FIG.3 shows an example of an inter-zone interlaced pilot configuration. FIG.3 shows a basic unit (called "resource unit" (or "RU") hereinafter) composed of a partial subcarriers and OFDM symbols in an OFDM signal configuration shown in FIG.2.

In the inter-zone interlaced pilot configuration, arrangement of pilot symbols transmitted to data symbols with high power, is set to be a different arrangement in MBS zone #1, MBS zone #2, and MBS zone #3. Namely, the pilot symbol is not allowed to be arranged in the same time and frequency resource between zones.

FIG.3 shows an example of a cyclic shift of the pilot symbols which are shifted by (k-1) OFDM symbol in a direction of a positive time axis within RU, in a k-th MBS zone (MBS zone #k). In the inter-zone interlaced pilot configuration, a certain inter-zone interference suppression effect can be obtained, irrespective of a fluctuation state (time/frequency correlation) of a propagation path. Meanwhile, when a pilot density is high, an influence of the interference on data is great, thus causing the reception performance to be deteriorated.

[2] Inter-zone orthogonal pilot configuration

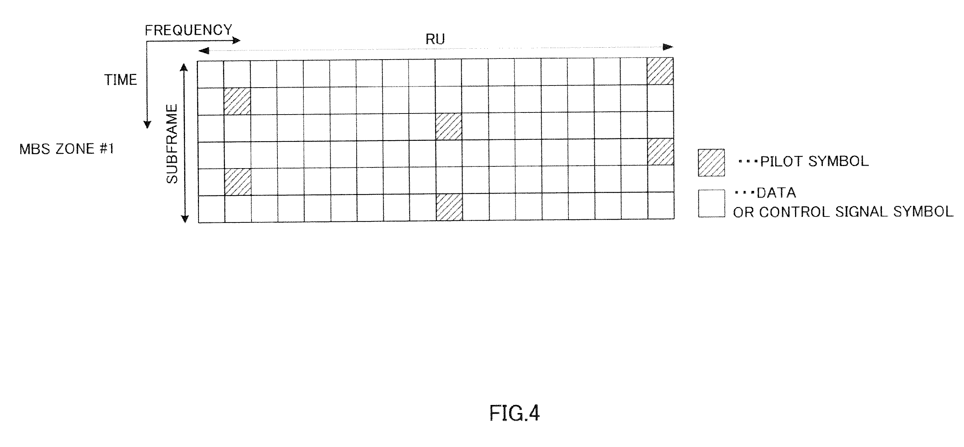

FIG.4 shows an example of an inter-zone orthogonal pilot configuration. Similarly to FIG.3, FIG.4 shows RU, being the basic unit composed of a partial subcarriers and OFDM symbols in the OFDM signal configuration shown in FIG.2.

In the inter-zone orthogonal pilot configuration, an orthogonal code specific to the zone is superimposed on the pilot signal. Namely, pilot sequence P(m) is multiplied by orthogonal code sequence SFN{k} having orthogonal code length N in the k-th MBS zone (MBS ZONE #k), to thereby obtain $Qk(m) = P(m)SFN\{k\}[m]$, and superimpose the orthogonal code specific to the zone on the pilot signal.

Here, SFN{k}[m] shows the m-th element in orthogonal code sequence SFN{k}. Further, m = 1, ..., Np, and Np shows the number of pilot symbols.

For example, when the orthogonal code length is expressed by N = 3, the orthogonal code sequence is expressed by SF3{k}[m] =exp[i mφ(k)]. Note that exp[x] indicates an exponential function for logarithmic base e of natural logarithm. Further, i indicates an imaginary unit. Here, in orthogonal code sequence SF3{k}[m] = exp[i mφ(k)], φ(1) = 0, and φ(2) = 2π/3, and φ(3) = 4π/3 are established.

Namely, the following orthogonal codes are allocated to MBS zones #1 to #3.

$$F3\{1\} = [1, 1, 1],$$

$$F3\{2\} = [\exp(i\ 2\pi/3),\ \exp\{i\ 2(2\pi/3)\},\ \exp\{i\ 3(2\pi/3)\}],$$

$$F3\{3\} = [\exp(i\ 4\pi/3),\ \exp\{i\ 2(4\pi/3)\},\ \exp\{i\ 3(4\pi/3)\}]$$

In the terminal, the pilot symbol multiplied by the orthogonal code which is transmitted from the multiple MBS zones, is superimposed and received. Here, when a received symbol for Qk(m) is R(m), channel estimation value H(w) can be calculated, with inter-zone interference suppressed, by applying averaging processing (despreading processing) to the whole length of the orthogonal code, using equation 1.

For example, in a case of the orthogonal code length N, channel estimation value H(w) can be calculated, with inter-zone interference of maximum (N-1) zones suppressed, using equation 1. Note that in equation 1, w = 1, ..., Np-2 is established, and Prep(m) indicates a replica signal of pilot sequence P(m). Further, floor(x) shows a maximum natural number not exceeding x.

[1]

$$H(w) = \frac{1}{N} \sum_{j=-floor(N/2)}^{floor(N/2)} \frac{R(m+j+1)}{P_{rep}(m+j+1)SF_N\{k\}[\mathrm{mod}(m+j,N)+1]} \qquad \cdots(\text{Equation 1})$$

Thus, in the calculation of the channel estimation value H(w), the averaging processing is applied to the whole length of the orthogonal code length, and therefore in the inter-zone orthogonal pilot configuration, high inter-zone interference suppression effect can be obtained, when a frequency correlation is high between pilots. Meanwhile, when the frequency correlation between pilots is low, orthogonal codes are interfered with each other, thus reducing the inter-zone interference suppression effect. Further, since the averaging processing is applied to the whole length of the orthogonal code, the channel estimation accuracy is greatly deteriorated.

In MBS-SFN transmission, a multipath from multiple base stations in the MBS zone is synthesized to be formed into a propagation path. Therefore, a delay spread becomes larger than the delay spread at the time of unicast. As a result, the frequency correlation is relatively low. When the orthogonal pilot is applied to the MBS-SFN propagation path as a zone-specific pilot, a high interference suppression effect is shown when inter-zone interference is great, and meanwhile when inter-zone interference is relatively light, a phenomenon of a reversed reception characteristics appears (phenomenon of deteriorated reception characteristics due to heavier inter-code interference between orthogonal pilots than inter-zone interference), between the inter-zone orthogonal pilot configuration and the inter-zone interlaced pilot configuration, under an influence of the deterioration of the channel estimation accuracy which is caused by the averaging processing of pilot symbols applied to the whole length of the orthogonal code.

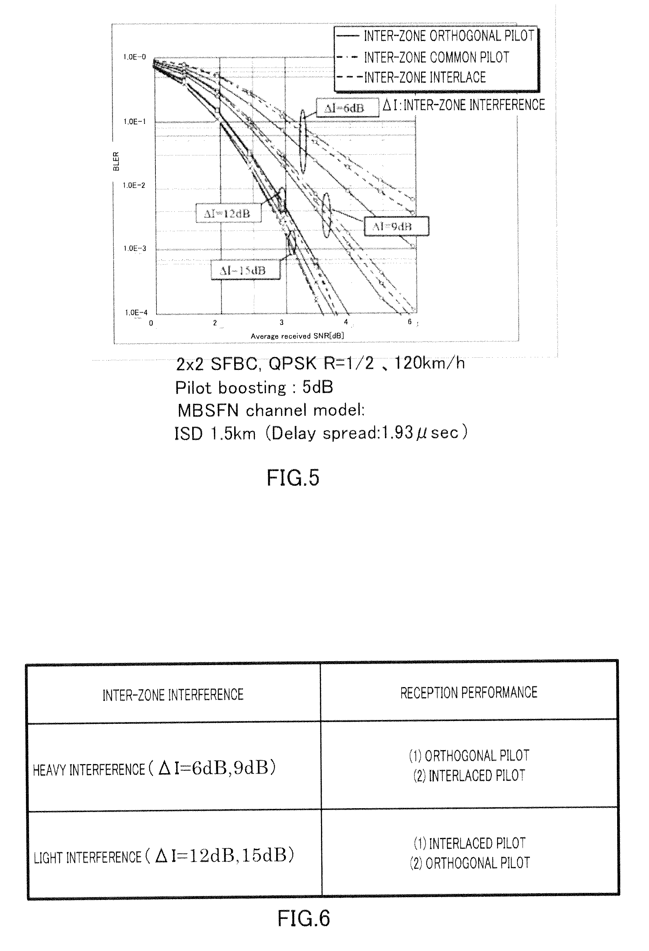

FIG.5 shows an example of simulation results when the zone-specific pilot shown in FIG.3 and FIG.4 is used. Note that the simulation results shown in FIG.5 are the results when a path model described in non-patent document 1 is used as a propagation path model of MBS SFN.

The simulation results shown in FIG.5 are summarized in FIG.6. FIG.6 shows comparison results of BLER (Block Error Rate) when the orthogonal pilot configuration and the interlaced pilot configuration are used, with inter-zone interference ΔI as a parameter. From FIG.5, it is found that the phenomenon of the reversed reception characteristic appears between the inter-zone orthogonal pilot configuration and the inter-zone interlaced pilot configuration, due to the inter-zone interference ∆I.

Citation List

Non-Patent Literature

NPL 1
IEEE802.16m C80216m_09/0089r2, "Performance comparison of Constellation Rearrangement and Bit Rearrangement"

Summary of Invention

Technical Problem

Thus, even if the inter-zone orthogonal pilot is applied as a NBS zone-specific pilot in the propagation path with low frequency correlation like the frequency correlation at the time of WBS SFN transmission, high channel estimation accuracy can not be necessarily ensured while obtaining high inter-zone interference suppression characteristics.
It is therefore an object of the present invention to provide a base station apparatus, a terminal apparatus, a pilot transmission method and a channel estimation method capable of obtaining high inter-zone interference suppression characteristics and high channel estimation accuracy, even in a propagation path with low frequency correlation like the frequency correlation at the time of MBS SFN transmission.

Solution to Problem

A base station apparatus of the present invention includes a pilot symbol generating section that generates a pilot sequence by dividing a minimum resource unit, being a minimum unit for allocating a communication resource at the time of MBS transmission, into a plurality of subblocks, based on a correlative bandwidth corresponding to a delay spread of a propagation path in a MBS zone, and multiplying a pilot symbol included in each of the subblocks by an orthogonal code sequence having a length corresponding to the number of pilot symbols included in each of the subblocks as a code length; and a transmitting section that transmits the pilot sequence thus generated.
A terminal apparatus of the present invention includes a receiving section that receives a pilot sequence generated by dividing a minimum resource unit, being a minimum unit for allocating the communication resource at the time of MBS transmission, into a plurality of subblocks based on a correlative bandwidth corresponding to a delay spread of a propagation path in a MBS zone, and multiplying pilot symbols included in each of the subblocks by an orthogonal code sequence having a length corresponding to the number of pilot symbols included in each of the subblocks as a code length; and a channel estimating section that estimates channels using the pilot sequence.
A pilot transmission method of the present invention includes: dividing a minimum resource unit, being a minimum unit for allocating the communication resource at the time of MBS transmission, into a plurality of subblocks based on a correlative bandwidth corresponding to a delay spread of a propagation path in a MBS zone; multiplying a pilot symbol included in each of the subblocks by an orthogonal code sequence having a length corresponding to the number of pilot symbols included in each of the subblocks as a code length; and transmitting the pilot symbol multiplied by the orthogonal code sequence.
A channel estimation method of the present invention includes: receiving a pilot sequence generated by dividing a minimum resource unit, being a minimum unit for allocating the communication resource at the time of MBS transmission, into a plurality of subblocks based on a correlative bandwidth corresponding to a delay spread of a propagation path in a MBS zone, multiplying a pilot symbol included in each of the subblocks by an orthogonal code sequence having a length corresponding to the number of pilot symbols included in each of the subblocks as a code length; and estimating the channel using the pilot sequence.

Advantageous Effects of Invention

According to the present invention, high inter-zone interference suppression characteristics can be obtained and high channel estimation accuracy can be ensured, even in a propagation path with low frequency correlation like the frequency correlation at the time of MBS SFN transmission.

Brief Description of Drawings

FIG.1 is a view showing a conceptual view of a multi-MBS zone;

FIG.2 is a view showing a mapping pattern of a data signal and a pilot signal when OFDM modulation is used;

FIG.3 is a view showing an example of an inter-zone interlaced pilot configuration;

FIG.4 is a view showing an example of an inter-zone orthogonal pilot configuration;

FIG.5 is a view showing an example of a simulation result when an zone-specific pilot shown in FIG.3 and FIG.4 is used;

FIG.6 is a view showing simulation results;

FIG.7 is a view showing an example of a resource unit (RU);

FIG.8 is a view showing an example of a resource unit block (RUB), being a minimum transmission unit of BS transmission;

FIG.9 is a view showing a state that RUB is divided into nine pilot blocks;

FIG.10 is a view for explaining a numbering method of m of pilot symbol PPB(Npb)-n(m);

FIG.11 is a format view of MBS identifier;

FIG.12 is a view showing corresponding examples of the MBS identifier and the orthogonal code sequence;

FIG.13 is a view showing a configuration of a principle part of a base station according to Embodiment 1 of the present invention;

FIG.14 is a view showing a configuration of a principle part of a terminal according to Embodiment 1;

FIG.15 is a view showing an internal configuration of a channel estimation section;

FIG.16 is a view showing an example of allocation of orthogonal codes according to Embodiment 2 of the present invention;

FIG.17 is a view showing an example of applying the zone-specific pilot configuration shown in FIG.16, to the RUB shown in FIG.9;

FIG.18 is a view for explaining an application effect of the zone-specific pilot according to Embodiment 2;

FIG.19 is a view showing an example of partially interlacing the pilot symbol, performed to the RUB shown in FIG.9;

FIG.20 is a view showing a power level of the pilot symbol when the pilot symbol is interlaced between zones;

FIG.21 is a view for explaining the application effect of the zone-specific pilot according to Embodiment 3 of the present invention;

FIG.22 is a view showing the configuration of a principle part of a base station according to Embodiment 3;

FIG.23 is a view showing the configuration of a principle part of a terminal according to Embodiment 3;

FIG.24 is a view showing an example of RUB according to Embodiment 4 of the present invention;

FIG.25 is a view showing an example of the allocation of orthogonal codes according to Embodiment 4;

FIG.26 is a view showing another example of the allocation of the orthogonal codes according to Embodiment 4;

FIG.27 is a view showing another example of the allocation of the orthogonal codes according to Embodiment 4;

FIG.28 is a view showing an example of RUB according to Embodiment 5 of the present invention; and

FIG.29 is a view showing an example of the allocation of the orthogonal codes according to Embodiment 5.

Description of Embodiments

Embodiments of the present invention will be described hereinafter, with reference to the accompanied drawings.

Points focused by inventors of the present invention are correlation between subcarrier frequencies estimated in a MBS propagation path, and deviation in a distribution of pilot symbols in a minimum transmission unit (unit of a resource allocated on OFDM) of MBS transmission, and the present invention is hereby achieved. Next, an example of using an OFDM modulation system as a multi-carrier transmission system, will be described.

Further, in the description hereinafter, a minimum unit for allocating the communication resource composed of specific number of subcarriers in a subframe including a plurality of OFDM symbols, is defined as a resource unit (RU).

Further, in the explanation given hereinafter, explanation will be given for a case that a resource unit block (RUB) composed of a plurality of RUs (M-RUs) is set as a minimum unit at the time of MBS transmission.

(Embodiment 1)

In this embodiment, the resource unit block RUB, being a minimum transmission unit of the MBS transmission, is divided into a plurality of subblocks in each specified interval of subcarriers. Then, an orthogonal code having a length corresponding to the number of pilot symbols is superimposed on the pilot block composed of the plurality of pilot symbols included in each of the subblocks.

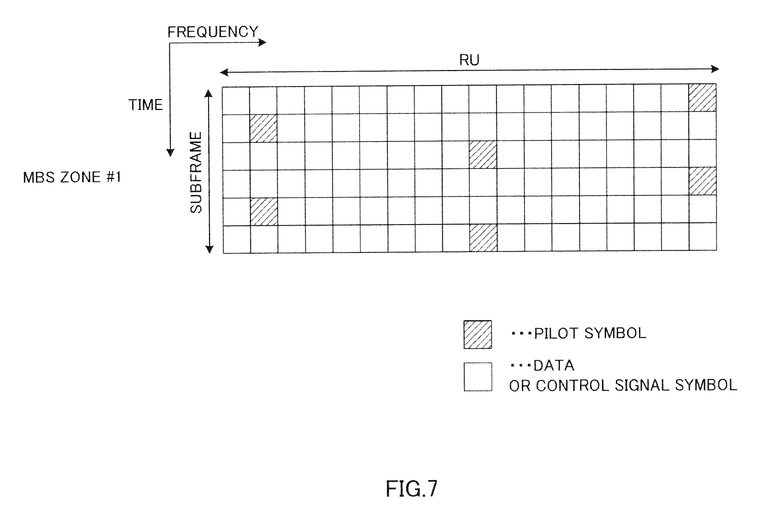

FIG.7 shows an example showing that RU is formed of 6 OFDM symbols and 18 subcarriers. As shown in FIG.7, pilot symbols (square of halftone dot meshing in the figure) and data symbols (outline square in the figure) are included in the RU. The pilot symbol is transmitted in an already known symbol pattern, and is used for estimating channels (i.e, channel estimation).

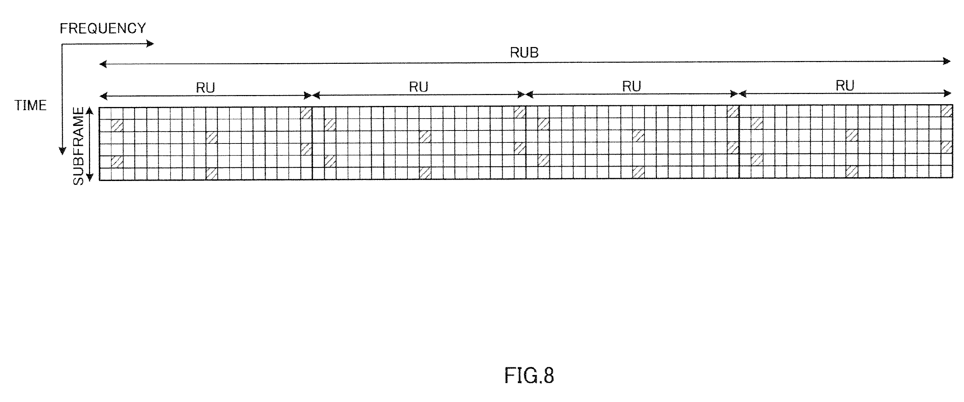

FIG.8 shows an example of RUB, being the minimum transmission unit for the MBS transmission. FIG.8 shows an example showing that RUB is composed of four (M = 4) RUs. As shown in FIG.8, in the RUB, being the minimum transmission unit for the MBS transmission, there is a deviation in the distribution of the pilot symbols.

Explanation will be given hereinafter, for a case that a method of configuring the zone-specific pilot configuration according to this embodiment, is applied to the pilot symbols in RUB, which are arranged in a pilot pattern as shown in FIG.8.

[A method of configuring an zone-specific pilot]

In this embodiment, first, the pilot symbols dispersed and arranged in RUB, are divided into a plurality of pilot blocks, based on a correlative bandwidth Bc [Hz] calculated from a delay spread estimated in the propagation path on an edge of a MBS zone at the time of MBS, SFN transmission.

Here, the pilot blocks are defined as the pilot symbols included in each of the subblocks in the divided RUB, which are divided in Nsc unit satisfying equation 2. In equation 2, Df indicates a subcarrier frequency interval [Hz], and $\alpha$ indicates a coefficient showing a prescribed positive value of 1 or less.

$$[2]$$

$$Nsc < \alpha Bc/Df \qquad \cdots (\text{Equation 2})$$

Thus, Nsc is determined based on the correlative bandwidth Bc, and by dividing the RUB into subblocks in Nsc unit, mutually high correlation is ensured in the subcarriers in the subblocks.

Here, for example, as shown in FIG.8, when an arrangement of the pilot symbols in RUB are not uniform and there is a deviation in the distribution of the pilot symbols, the equation 2 is satisfied and RUB is divided so as to divide the pilot blocks, in a low density domain of the pilot symbols. Thus, a portion in a dense state of the pilot symbols can be included in one pilot block, and the interval between pilot symbols in the pilot block (interval between subcarrier frequencies) can be made shorter. As a result, the frequency correlation between the pilot symbols in the pilot block can be set to be high, and therefore as will be described later, inter-orthogonal code interference can be further effectively reduced, and accuracy of a channel estimation value can be further effectively improved.

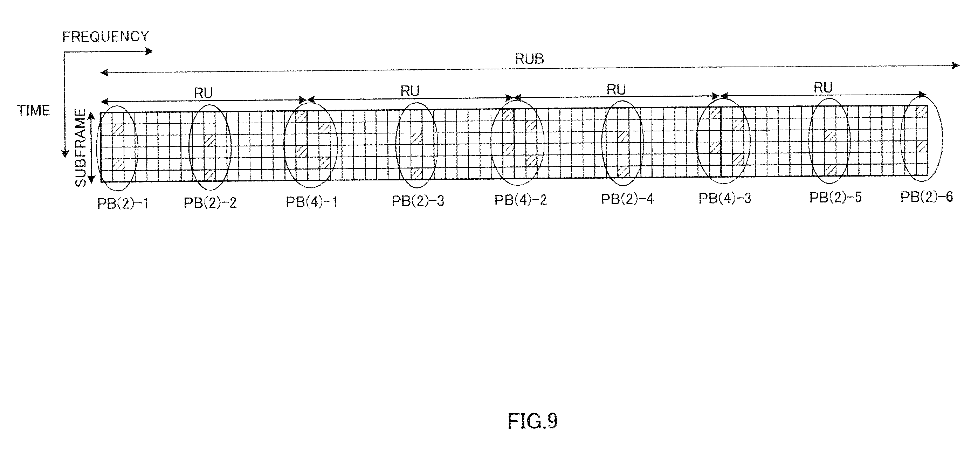

FIG.9 shows the results obtained by division performed to the pilot pattern shown in FIG.8, in a region of low density domain of the pilot symbols. An example shown in FIG.9 shows a state that RUB is divided into nine pilot blocks. At this time, the number Npb of pilot symbols included in each pilot block, depends on the pilot pattern in RU.

Next, in this embodiment, the pilot block including the same number of pilot symbols is extracted, and the extracted pilot block is arranged into a group. The group in which the number Npb of the pilot symbols is K, is expressed by pilot block group PB(K), and the n-th pilot block in this group is expressed by PB(K)-n.

In the example shown in FIG.9, there are two PB groups of PB(2) and PB(4), and there are 6 pilot blocks in PB(2), such as PB(2)-1 to PB(2)-6. Further, there are 3 pilot blocks in PB(4), such as PB(4)-1 to PB(4)-3.

The orthogonal code having a length corresponding to the number of pilot symbols included in PB(K) is allocated to each pilot block group PB(K), and is superimposed on the pilot symbols in each pilot block. At this time, orthogonal code length SF is determined in consideration of estimated number N1 of inter-MBS zone interference. Specifically, length SF of the orthogonal code is determined, so as to satisfy SF $\geq$ N1 + 1, regarding estimated number N1 of inter-MBS zone interference. Thus, sufficient interference suppression effect can be obtained.

For example, in FIG.9, four (Npb = 4) pilot symbols are included in PB group PB(4). At this time, in a case of N1 = 2, when 3 or 4 is selected as the orthogonal code length SF, SF $\geq$ N1 + 1 is satisfied. Therefore, sufficient interference suppression effect can be obtained to the number N1 = 2 of the estimated inter-MBS zone interference. Further, two (Npb = 2) pilot symbols are included in PB group PB(2), and therefore sufficient interference suppression effect can be obtained when the number of the estimated inter-MBS zone interference is N1 = 1.

[Superimposition method #1 of the orthogonal code]

Next, a method of superimposing the orthogonal code on the pilot symbols in the pilot block will be described. Explanation will be given for a case that the orthogonal code having orthogonal code length SFPB(Npb) is allocated to pilot symbol PPB(Npb)(m) of pilot block group PB(Npb).

The orthogonal code having orthogonal code length SFPB(Npb) includes orthogonal code sequences of SFPB (Npb) kinds. For example, the orthogonal code having a length of 2 (SF = 2) includes orthogonal code sequences of two kinds: SF2{1}=[1, 1] and SF2{2}=[1, -1].

Further, the orthogonal code having a length of three (SF = 3) includes orthogonal code sequences of three kinds expressed by SF3{k}[m]=exp[i mφ(k)]. Here, φ(1)=0, φ(2)=2π/3, φ(3)=4π/3. Specifically, the orthogonal code having a length of three (SF = 3) includes:

$$SF3\{1\}=[1, 1, 1],$$

$$SF3\{2\}=[\exp(i\ 2\pi/3),\ \exp\{i\ 2(2\pi/3)\},\ \exp\{i\ 3(2\pi/3)\}],$$

$$SF3\{3\}=[\exp(i\ 4\pi/3),\ \exp\{i\ 2(4\pi/3)\},\ \exp\{i\ 3(4\pi/3)\}]$$

Further, the orthogonal code having a length of four (SF = 4) includes:

$$SF4\{1\}=[1, 1, 1, 1],$$

$$SF4\{2\}=[1, 1, -1, -1],$$

$$SF4\{3\}=[1, -1, 1, -1],$$

$$SF4\{4\}=[1, -1, -1, 1]$$

In this embodiment, different orthogonal code sequences are respectively allocated to NZ-th MBS zone and (NZ+1)-th MBS zone, which are close together. Namely, SFPB(Npb){j} is allocated to the NZ-th MBS zone, and SFPB (Npb){k} is allocated to the (Nz+1)-th MBS zone. Here, j≠k.

Note that the orthogonal code sequences are allocated to the Nz-th MBS zone and the (Nz+1)-th MBS zone, based on block orthogonal pilot information or MBS identifier. A method of allocating the orthogonal code sequences to each MBS zone will be described later.

Then, SFPB(Npb){j}[m] is superimposed on pilot symbol PPB(Npb)-n(m) included in the n-th pilot block PB (Npb)-n of pilot block group PB(Npb), to thereby obtain SFPB(Npb){j}[m]×PPB(Npb)-n(m). Here, SFPB(Npb){j}[m] indicates a m-th element in orthogonal code sequence SFPB(Npb){j}, satisfying m = 1, ..., Npb.

Note that when the number of pilot symbols included in the n-th pilot block PB(Npb)-n is larger than allocated orthogonal code length SFPB(Npb) (Nbp>SFPB(Npb)), the element of the orthogonal code SFPB(Npb){j} is generated cyclically and is superimposed on PPB(Npb)-n(m). Namely, it is superimposed on PPB(Npb)-n(m), and is expressed by SFPB(Npb){j}[mod(m-1, SFPB(Npb))+1]×PPB(Npb)-n(m). Here, mod (x, y) indicates a modulo operator that computes the remainder of dividing x by y.

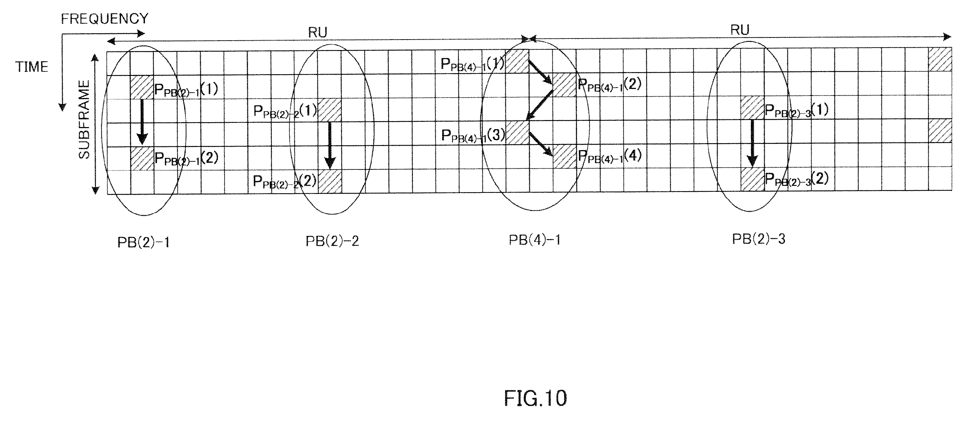

Numbering of m of pilot symbol PPB(Npb)-n(m) is carried out, for example, as shown in FIG.10. Namely, in the first symbol OFDM in the subframe, first, m is sequentially assigned to the pilot symbol that appears when sweeping is carried out from a smaller subcarrier number to a larger subcarrier number of PB-n(Npb) in the pilot block, like PPB (Npb)-n(1), PPB(Npb)-n(2), ..., and PPB(Npb)-n(k). Then, when the subcarrier number in the pilot block is maximum, m is sequentially assigned to the subsequent second OFDM symbol and thereinafter as well, by sequentially sweeping the subcarriers in the pilot block, like PPB(Npb)-n(k+1), PPB(Npb)-n(k+2). Note that the method of numbering is not particularly limited, and a method of sequentially numbering the pilot symbols which are close together may be used.

Next, a method of allocating the orthogonal code sequence to each MBS zone, will be described.

The orthogonal code sequence can be allocated to each MBS zone, based on inter-MBS zone-specific pilot configuration information (block orthogonal pilot information) or MBS identifier. A case that allocation is carried out based on the MBS identifier, will be described hereinafter in detail. Here, MBS identifier (or multi-cast identifying information) is the identifying information identifying transmitted MBS data signals, showing that same MBS identifier means data of the same content, thus ensuring identity of contents of the data. Further, control information transmitted from a base station as will be described later, is transmitted by correlating MBS identifier and a mapping layout of MBS data on OFDM.

The MBS identifier is divided into four groups such as group #1 to group #4, and different orthogonal code sequences are correlated to each group as follows.

Group #1: orthogonal code sequence # (Multiple SFN)
Group #2: orthogonal code sequence #2 (Multiple SFN)
Group #3: orthogonal code sequence #3 (Multiple SFN)
Group #4: without orthogonal code sequence (Single SFN)

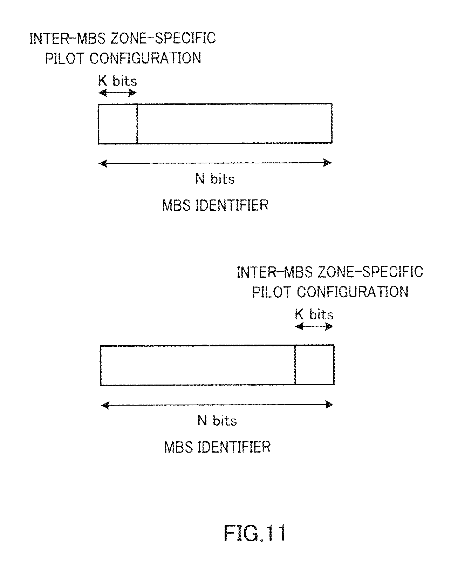

Then, each group is allocated to the adjacent MBS zone. Thus, when the orthogonal code sequence is allocated to the MBS zone, MBS identifier and MBS zone are correlated one-to-one (in the MBS zone, same content is transmitted from different multiple base stations and therefore MBS identifiers from the different multiple base stations are identical), and therefore the inter-MBS zone-specific pilot configuration information (block orthogonal pilot information) can be included in the MBS identifier information. For example, as shown in FIG.11, inter-MBS zone-specific pilot configuration information can be included in significant (or least significant) K-bit of the MBS identifier (M-ID) consisting of N-bit.

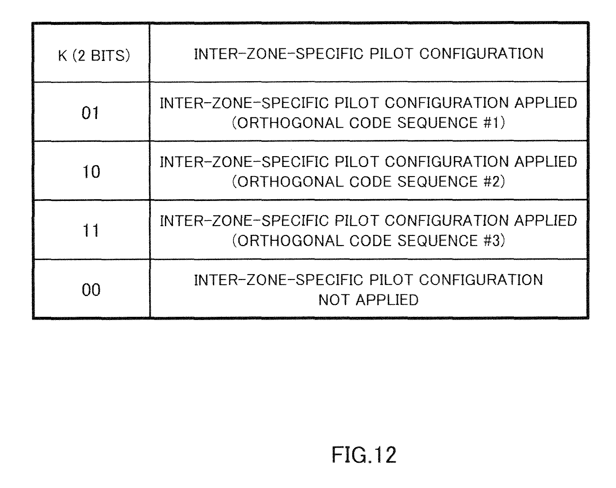

FIG.12 shows an example of a case that the inter-MBS zone-specific pilot configuration information is included in 2- bits (k-2) of the MBS identifier consisting of N-bits, when estimating inter-MBS zone interference number N1 = 2. In the example shown in FIG.12, for example, when the MBS identifier of K-bits showing "01" is identified, it is found that the zone-specific pilot is applied and orthogonal code sequence #1 is used in the terminal.

Thus, when the zone-specific pilot configuration information is included in the MBS identifier, total number used as the MBS identifier is still N-bit as conventional, and the inter-MBS zone-specific pilot configuration information can be included in N-bit. Therefore, explicit transmission of the zone-specific pilot configuration information is not necessary, and control information can be reduced.

Note that MBS zone identifier for identifying the MBS zone may also be used, instead of the MBS identifier. Further, instead of the MBS identifier, MBS contents identifier for identifying contents of MBS may also be used.

Information of the orthogonal code sequence used for each MBS, is included in a control information signal and is transferred from the base station to the terminal. In the terminal, information of the orthogonal code sequence allocated to its own zone from the control information signal, is extracted and by using this orthogonal code sequence, channel estimation processing is carried out when the MBS data signal is received.

Next, the configuration of the base station and the terminal according to this embodiment will be described.

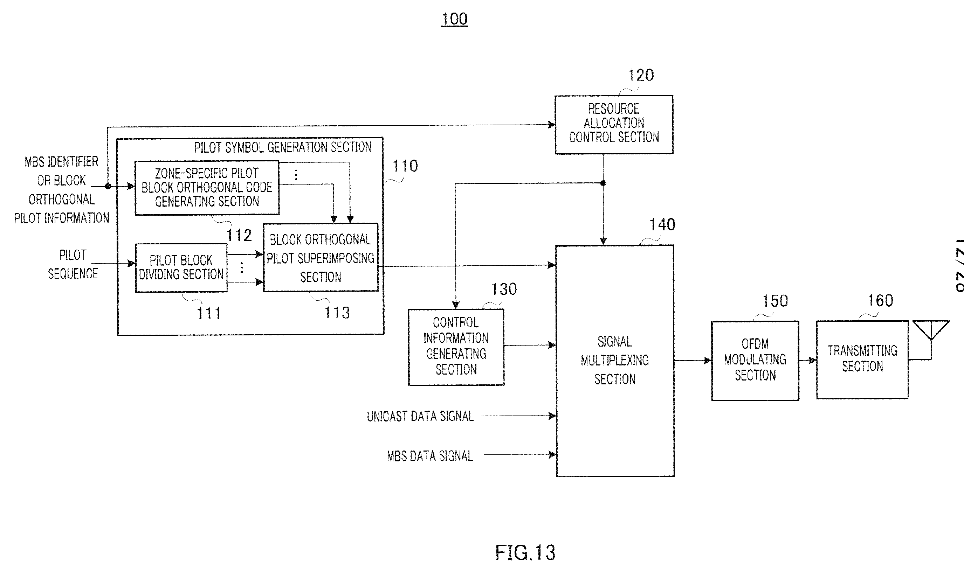

FIG.13 shows the configuration of a principle part of base station 100 according to this embodiment. Note that in order to avoid complicated explanation, FIG. 13 shows a component related to transmission through a down-link which is closely related to the present invention, and a component related to reception in uplink is not shown and explanation therefore is omitted.

Pilot symbol generating section 110 generates the zone-specific pilot, based on block orthogonal pilot information or MBS identifier. Pilot symbol generating section 110 includes pilot block dividing section 111, zone-specific pilot block orthogonal code generating section 112, and block orthogonal pilot superimposing section 113.

Pilot block dividing section 111 divides pilot sequence P(m) by dividing RUB into a plurality of pilot blocks, RUB being a minimum transmission unit at the time of MBS transmission, based on correlative bandwidth Bc [Hz] calculated from the delay spread of the propagation path for estimated MBS SFN transmission. Note that pilot sequence P(m) is a specified signal sequence which is already known at a receiving side. Further, as described above, the pilot block includes the pilot symbol which is included in each of the subblocks in RUB, the subblocks being divided in Nsc unit satisfying equation 2.

Zone-specific pilot block orthogonal code generating section 112 allocates to each pilot block, the orthogonal code sequence capable of reducing the inter-zone interference mutually between the adjacent MBS zones, according to the block orthogonal pilot information or the MBS identifier. Zone-specific pilot block orthogonal code generating section 112 generates the orthogonal code sequence for each pilot block, and outputs the generated orthogonal code sequence in each pilot block to block orthogonal pilot superimposing section 113.

Block orthogonal pilot superimposing section 113 superimposes the orthogonal pilot on each pilot block in pilot block unit, in accordance with the aforementioned [superimposition method of the orthogonal pilot], and outputs the pilot signal after superimposition to signal multiplexing section 140.

Resource allocation control section 120 determines a mapping layout on OFDM (OFDM symbol, positional information of subcarrier frequency, data length) of a unicast data length), and outputs the information of a determined mapping layout to control information generating section 130 and signal multiplexing section 140. Note that identity of the MBS data signal can be identified by the MBS identifier (or multicast identifying information), and the MBS identifier and the mapping layout of MBS data on OFDM can be correlated. Therefore, the mapping layout of the MBS data signal can be computed (referenced) from the MBS identifier (or multicast identifying information).

Control information generating section 130 generates a control information signal. Specifically, control information generating section 130 generates the control information signal including pilot signals, MBS data signals or mapping information on OFDM regarding unicast data signals (including OFDM symbol, positional information of subcarrier frequency, data length, MBS identifier (or multicast identifying information), transmission format information (m-ary modulation value, error correction encoding method, coding rate, etc.), and zone-specific pilot configuration information (also called "block orthogonal pilot information" hereinafter).

Signal multiplexing section 140 carries out mapping of the pilot signals, data signals (unicast data signals or MBS data signals), and control information signals on OFDM, based on the mapping information.

OFDM modulating section 150 converts the signals of a frequency domain mapped on OFDM, to signals of a time domain, by applying IFFT (Inverse Fast Fourier Transform) processing thereto, adds a guard interval thereto, and outputs it to transmitting section 160.

Transmitting section 160 applies D/A (Digital to Analog) conversion, wireless transmission processing such as up-conversion to the signals of the time domain after added with the guard interval, and then transmits the signals that has undergone wireless transmission processing, to each terminal via an antenna.

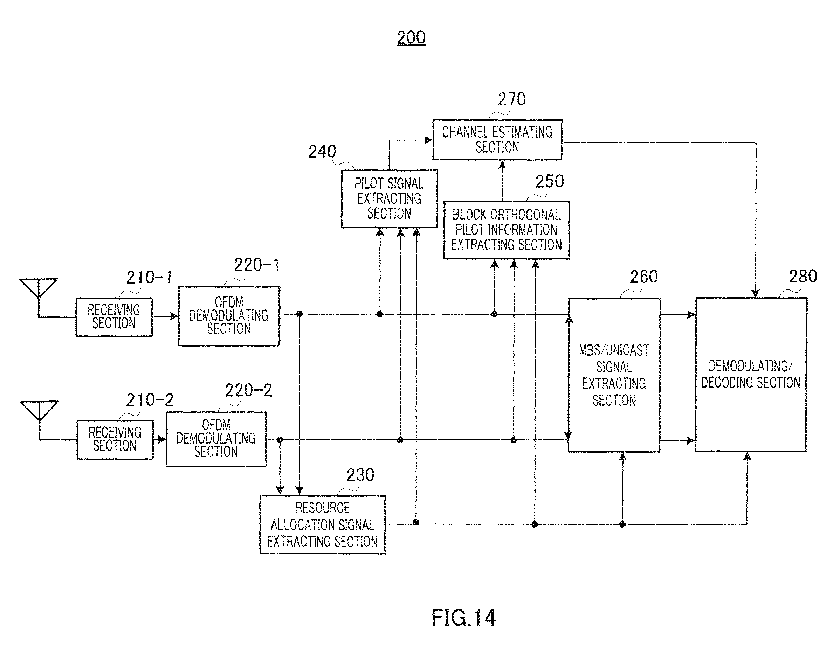

FIG.14 shows the configuration of a principle part of terminal 200 according to this embodiment. Note that in order to avoid complicated explanation, FIG.14 shows a component related to reception through a down-link which is closely related to the present invention, and a component related to reception in uplink is not shown and explanation therefore is omitted.

Receiving sections 210-1 and 210-2 receive a signal transmitted from the base station, and applies wireless reception processing to received signals, such as down-conversion and A/D (Analog to Digital) conversion, and thereinafter outputs the signals that have undergone wireless reception processing to OFDM demodulating sections 220-1 and 220-2.

OFDM demodulating sections 220-1 and 220-2 applies OFDM demodulation processing to the signals that have undergone wireless reception processing, and outputs the signals after demodulation, to resource allocation information extracting section 230, pilot signal extracting section 240, block orthogonal pilot information extracting section 250 and MBS/unicast signal extracting section 260.

Resource allocation information extracting section 230 extracts the control information signal from the signals inputted from OFDM demodulating sections 220-1 and 220-2. Then, resource allocation information extracting section 230 outputs the mapping information included in the control information signal, to pilot signal extracting section 240 and MBS/unicast signal extracting section 260. Further, resource allocation information extracting section 230 outputs the transmission format information (such as m-ary modulation value, error correction encoding method, and coding rate, etc.) included in the control information signal, to demodulating/decoding section 280. Further, resource allocation information extracting section 230 outputs the other information (such as block orthogonal pilot information) included in the control information signal, to the block orthogonal pilot information extracting section 250.

Pilot signal extracting section 240 extracts pilot symbols transmitted together with the MBS data signal or the unicast data signal. Note that inserting positions of the pilot symbols are sometimes same or different, depending on the MBS data signal or the unicast data signal. In the latter case, pilot signal extracting section 240 extracts the pilot symbols based on the mapping information included in the control information signal.

Block orthogonal pilot information extracting section 250 extracts the allocation information (block orthogonal pilot information) of the orthogonal code allocated to each pilot block specific to the MBS zone. Further, block orthogonal pilot information extracting section 250 extracts the block orthogonal pilot information based on the MBS identifier.

MBS/unicast signal extracting section 260 extracts the MBS data signal or the unicast data signal, based on the mapping information included in the control information signal, and outputs the extracted MBS data signal or unicast data signal to demodulating/decoding section 280.

Channel estimating section 270 estimates channels, using the pilot symbols inputted from the pilot signal extracting section 240 and the block orthogonal pilot information inputted from the block orthogonal pilot information extracting section 250, and outputs estimated values of the channels to demodulating/decoding section 280.

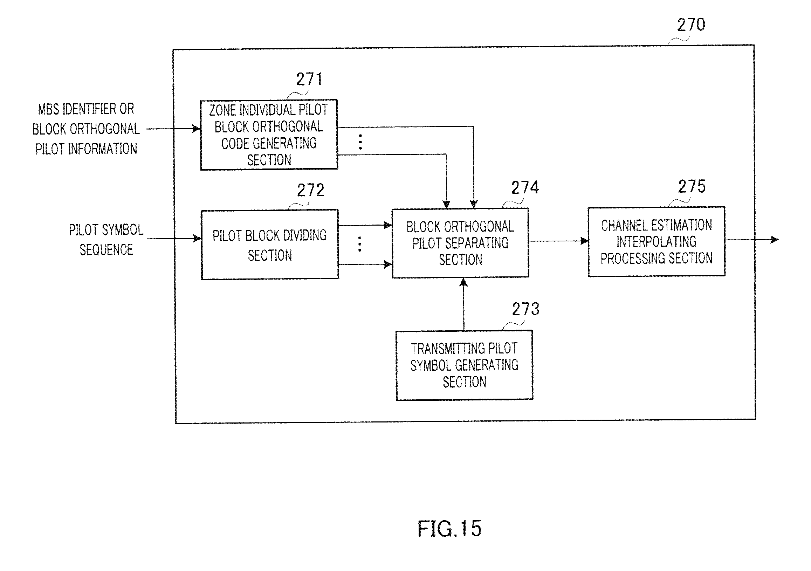

An operation and an internal configuration of the channel estimating section 270 will be descried, using FIG. 15. As described in the aforementioned "superimposing method #1 of the orthogonal code, an example of a case that orthogonal code sequence SFPB(Npb){j} is allocated to pilot block group PB(Npb) in the Nz-th MBS zone, will be described hereinafter.

FIG.15 is a view showing the internal configuration of channel estimating section 270.

Zone-specific pilot block orthogonal code generating section 271 generates orthogonal code sequence SFPB(Npb){j} in each pilot block group PB(Npb), based on the block orthogonal pilot information.

Pilot block dividing section 272 divides the extracted pilot symbol group R(k) into multiple pilot blocks PB(Npb)-n, to thereby obtain reception symbol group RPB(Npb)-n(m) in each pilot block PB(Npb). As described above, PB(Npb)-n indicates the n-th pilot block that belongs to pilot block group PB(Npb). Here, m=1, ..., Npb.

Transmission pilot symbol generating section 273 generates replica symbol TPB(Npb)-n(m) out of pilot symbols included in the transmitted previously known pilot block PB(Npb)-n.

Block orthogonal pilot separating section 274 calculates channel estimation value HPB(Npb)-n(w), which is a value of increasing a reception quality (SINR: Signal-to-Interference and Noise power Ratio) of the pilot signal of a desired MBS zone (received by this terminal), from the pilot symbol on which signals from multiple MBS zones are superimposed.

Specifically, block orthogonal pilot separating section 274 calculates channel estimation value HPB(Npb)-n(w), using equation 3-1 and equation 3-2. Note that in equation 3-1 and equation 3-2, floor(x) indicates a maximum natural number not exceeding x.

[3]

When SFPB(Npb)=2, 4, 8, ... is established,

$$H_{PB(Npb)-n}(w) = \frac{1}{SF_{PB(Npb)}} \sum_{u=1}^{SF_{PB(Npb)}} \frac{R_{PB(Npb)-n}(u + (w-1)SF_{PB(N_{ph})})}{T_{PB(Npb)-n}(u + (w-1)SF_{PB(N_{ph})})SF_{PB(N_{ph})}\{j\}[u]}$$

$$\ldots \text{(Equation 3-1)}$$

$$w=1, \ldots, floor(Npb/SF_{PB(Npb)})$$

When SFPB(Npb)=3 is established,

$$H_{PB(Npb)-n}(w) = \frac{1}{SF_{PB(Npb)}} \sum_{u=-floor(SF_{PB(Npb)}/2)}^{floor(SF_{PB(Npb)}/2)} \frac{R_{PB(Npb)-n}(u+w+1)}{T_{PB(Npb)-n}(u+w+1)SF_{PB(N_{ph})}\{j\}[\mod(u+w, SF_{PB(Npb)})+1]}$$

$$\ldots \text{(Equation 3-2)}$$

$$w=1, \ldots, Npb-2.$$

Channel estimation interpolating section 275 interpolates the channel estimation value based on data symbols, using the channel estimation value obtained by block orthogonal pilot separating section 274, and calculates the channel estimation value based on data symbols.

Thus, channel estimating section 270 estimates channels, using the pilot sequence obtained by multiplying the pilot symbols included in the subblock by the orthogonal code sequence, the orthogonal code sequence having a length corresponding to the number of pilot symbols included in the subblock which is divided based on the correlative bandwidth corresponding to the delay spread of the propagation path in the MBS zone, as the orthogonal code length. Thus, the channels can be estimated by using the pilot symbols on which the orthogonal code sequence having a minimum orthogonal code length necessary for ensuring an orthogonal relation with the pilot symbols having high frequency correlation in the subblock. Therefore, the whole length of the orthogonal code is averaged between pilots having high frequency correlation, and accordingly channel estimation accuracy can be improved.

In FIG.14 again, demodulating/decoding section 280 applies demodulation and decoding processing to the extracted MBS data signal or unicast data signal, based on the transmission format information included in the control information signal, and a channel estimation result obtained by the channel estimating section 270.

As described above, in this embodiment, pilot symbol generating section 110 divides a minimum resource unit, being a minimum unit for allocating the communication resource at the time of MBS transmission, into a plurality of subblocks based on the correlative bandwidth corresponding to the delay spread of the propagation path in the MBS zone, and multiplying the pilot symbols included in each of the subblocks by the orthogonal code sequence having a length corresponding to the number of pilot symbols included in each of the subblocks as the orthogonal code length. Thus, based on the pilot symbols having high frequency correlation in the subblock, channels can be estimated using the pilot symbols on which the orthogonal code sequence having the minimum orthogonal code length necessary for ensuring the orthogonal relation is superimposed. Therefore, averaging processing of the whole length of the orthogonal code is carried out between pilots having high frequency correlation, and accuracy of channel estimation can be improved.

(Embodiment 2)

In Embodiment 1, the pilot symbols included in each pilot block is multiplied by the orthogonal code sequence with the length corresponding to the number of pilot symbols included in each pilot block as the orthogonal code length.
Therefore, when the number of pilot symbols included in each pilot block is smaller than inter-MBS zone interference number, variation sometimes occurs in the suppression effect of the inter-orthogonal code interference, due to the MBS zone.
For example, in FIG.9, maximum orthogonal code length SFPB(2) is 2. Accordingly, when inter-MBS zone interference number N1 is expressed by N1 = 1, SF $\geq$ 2 is established, and sufficient interference suppression effect can be obtained. Meanwhile, when inter-MBS zone interference number is expressed by N1 = 2, SF $\geq$ needs to be satisfied to obtain sufficient interference suppression effect. However, SF $\geq$ 3 is not satisfied because the maximum orthogonal code length SFPB(2) is 2, and therefore sufficient interference suppression effect is hardly obtained. As a result, variation occurs in the interference suppression effect between MBS zones, depending on the allocated orthogonal code, thus remarkably reducing an interference suppression performance in the MBS zone of a worst case.
Therefore, in this embodiment, the orthogonal code is variably allocated to each pilot block in a frequency direction.

[Superimposition method #2 of the orthogonal code]

The superimposition method of the orthogonal code superimposed on the pilot symbols in the pilot block, will be described hereinafter. An example of a case that the orthogonal code having orthogonal code length SFPB(Npb) is allocated to pilot symbol PPB(Npb)-n(m) of the n-th pilot block PB(Npb)-n of pilot block group PB(Npb) will be described hereinafter. Here, m=1, ..., Npb. Note that hereinafter, explanation is limited to a case of PB(2) and NI=2.
In this embodiment, based on the block orthogonal pilot information or the MBS identifier, the following orthogonal code sequence SFPB(Npb){j} is respectively allocated to the n-th pilot block PB(Npb)-n of pilot block group PB(Npb), namely to the Nz-th to (Nz+N1)-th MBS zone which are close together.
Namely, the orthogonal codes are allocated to the (Nz+s)-th (s = 0, 1, 2) MBS zone (MBS zone #Nz + s), in accordance with equation 4-1 and equation 4-2.

$$[4]$$

$$\mathrm{SFPB(Npb)\{1\}} \quad \text{---} \quad \mathrm{mod(n\text{-}s, SFPB(Npb)+1)} \neq 0 \;\ldots \text{(Equation 4-1)}$$

$$\mathrm{SFPB(Npb)\{2\}} \quad \text{---} \quad \mathrm{mod(n\text{-}s, SFPB(Npb)+1)} = 0 \;\ldots \text{(Equation 4-2)}$$

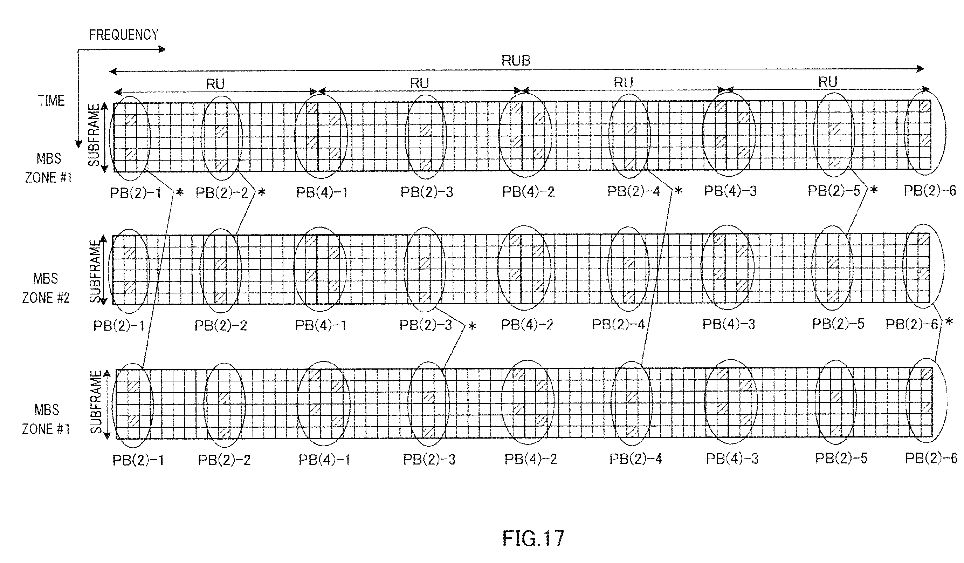

Based on aforementioned equation 4-1 and equation 4-2, the zone-specific pilot can be obtained, in which the orthogonal code is variably allocated to each pilot block in the frequency direction. Namely, the orthogonal code sequence having same orthogonal code length and different pattern, is allocated to pilot block PB(Npb)-n and pilot block PB(Npb)-(n+1) which are adjacent to each other in the frequency direction.

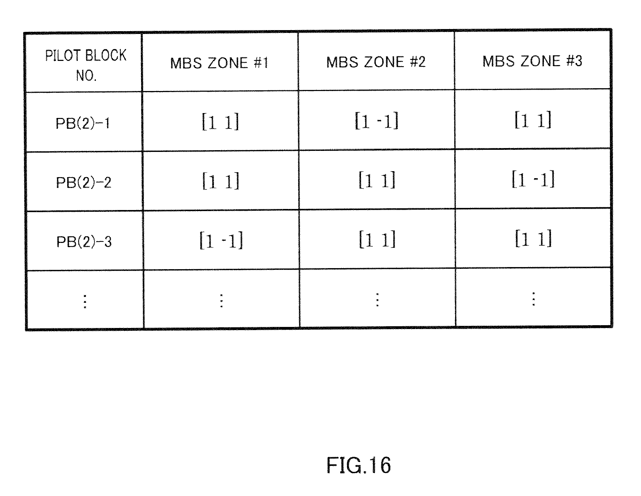

FIG.16 shows an example of a case that based on equation 4-1 and equation 4-2, the orthogonal codes are allocated to each pilot block PB(2)-n (n=1, 2, 3) in each MBS zone #Nz + s, where Nz = 1.
The following case is considered using FIG.17. Namely, the zone-specific pilot configuration shown in FIG.16 is applied to RUB. When N1 = 2, and the zone-specific pilot configuration of this embodiment is applied, SFPB(4)$\geq$NI+1=3 is satisfied and sufficient interference suppression characteristic can be obtained in PB(4).
Meanwhile, regarding PB(4), the orthogonal code sequence having same orthogonal code length and same pattern is allocated to pilot block PB(2)-n in the same frequency band. In FIG.17, the orthogonal code sequence having same orthogonal code length and same pattern is allocated to MBS zones attached with mark *. However, as is clarified from FIG.17, the frequency zone, to which the orthogonal code sequence having same orthogonal code length and same pattern is allocated, is uniformly dispersed into three MBS zones.
Thus, for example, the frequency zone, which is subjected to inter-zone interference, can be uniformly dispersed between zones, by allocating the orthogonal code sequence having same orthogonal code length and different pattern, to pilot block PB(Npb)-n and pilot block PB(Npb)-(n+1) which are adjacent to each other. Therefore, interference power can be reduced on an average basis, without depending on the MBS zone.

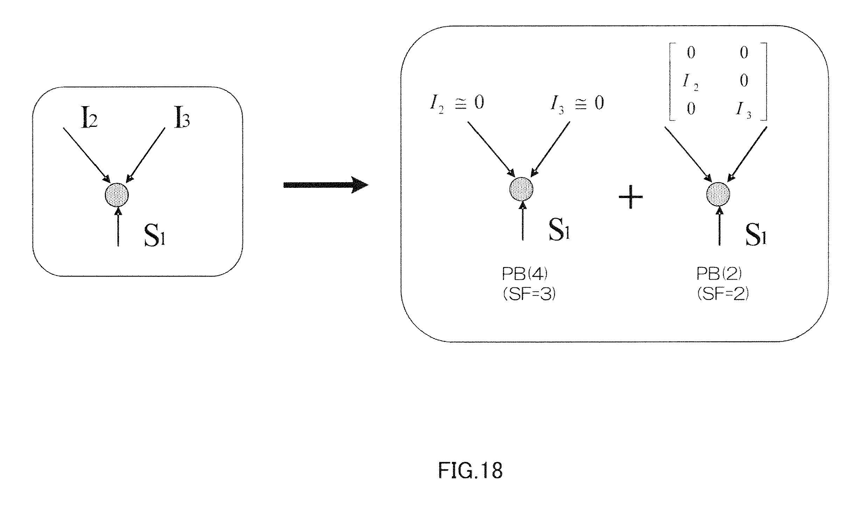

FIG.18 is a view for explaining an application effect of the zone-specific pilot according to this embodiment. In FIG.18, S1 indicates a desired signal power in the terminal positioned in MBS zone #1, and I2 and I3 indicate each interference power applied from adjacent MBS zone #2 and MBS zone #3.

For example, as shown in FIG.9, the magnitude of the interference power in a case that the total number (12) of pilots included in each PB(2) and PB(4) is the same, is taken into consideration.

When an inter-zone common pilot configuration is applied, MBS zone #1 receives interference from all 48 (=24 × 2) pilot symbols included in RUB of adjacent MBS zone #2 and MBS zone #3.

Meanwhile, when the zone-specific pilot configuration according to this embodiment is applied, SFPB(4) ≥NI+1=3 is satisfied in PB(4), and sufficient interference suppression characteristics can be obtained, and MBS zone #1 does not receive interference from adjacent MBS zone #2 and MBS zone #3. Thus, the magnitude of the interference power is regarded as approximately 0.

Further, in PB(2), as shown in FIG.16, the pattern of the orthogonal code sequence allocated to pilot blocks PB(2)-1 and PB(2)-4 of MBS zone #1, is the same as the pattern of the orthogonal code sequence allocated to pilot blocks PB(2)-1 and PB(2)-4, and is different from the pattern of the orthogonal code sequence allocated to pilot blocks PB(2)-1 and PB(2)-4. Therefore, MBS zone #1 receives the interference from four pilot symbols included in pilot blocks PB(2)-1 and PB(2)-4 of MBS zone #3.

Similarly, the pattern of the orthogonal code allocated to pilot blocks PB(2)-2 and PB(2)-5 of MBS zone #1 is the same as the pattern of the orthogonal code sequence allocated pilot blocks PB(2)-2 and PB(2)-5 of MBS zone #2, and is different from the pattern of the orthogonal code sequence allocated to pilot blocks PB(2)-2 and PB(2)-5 of MBS zone #3. Therefore, MBS zone #1 receives the interference from four pilot symbols included in pilot blocks PB(2)-2 and PB(2)-5 of MBS zone #2.

Further, the pattern of the orthogonal code sequence allocated to pilot blocks PB(2)-3 and PB(2)-6 of MBS zone #1 is different from the pattern of the orthogonal code sequence allocated to pilot blocks PB(2)-3 and PB(2)-6 of MBS zone #2 and MBS zone #3. Therefore, MBS zone #1 does not receive interference from MBS zone #2 and MBS zone #3, and the magnitude of the interference power is regarded as approximately 0.

When the aforementioned content is taken into consideration, in PB(2) and PB(4), the number of the pilot symbols that applies interference to MBS zone #1 is 8, out of 48 pilot symbols in total included in each RUB of MBS zone #2 and MBS zone #3. Therefore, interference power Ik can be reduced to 1/6, compared with a case that the inter-zone common pilot is applied.

As described above, by variably allocating the orthogonal code to each pilot block in the frequency direction, the inter-zone interference can be dispersed and the interference suppression effect can be improved on an average basis.

(Embodiment 3)

In Embodiment 2, the orthogonal code is variably allocated to each pilot block in the frequency direction, and the orthogonal code sequence having same orthogonal code length and different pattern is allocated to the adjacent pilot block PB(Npb)-n and pilot block PB(Npb)-(n+1) in the frequency direction.

However, in pilot block group PB(Npb) not satisfying SFPB(Npb) ≥ NI+1, inter-MBS zone interference remains between certain MBS zones. For example, in an example shown in FIG.16, the pattern of the orthogonal code sequence allocated to pilot block PB(Npb)-1 and PB(Npb)-4 and the pattern of the orthogonal code sequence allocated to MBS zone #3 is the same, and the inter-zone interference remains.

Therefore, in this embodiment, the pilot symbols between zones, in which the inter-zone interference remains, are partially formed in an interlaced arrangement.

A method of constituting the zone-specific pilot according to this embodiment will be described hereinafter. Note that the superimposition method of the orthogonal code is similar to that of Embodiment 2, and explanation therefore is omitted.

[A method of configuring the zone-specific pilot]

Explanation will be given hereinafter for a case that the method of configuring the zone-specific pilot according to this embodiment is applied to the RUB shown in FIG.9.

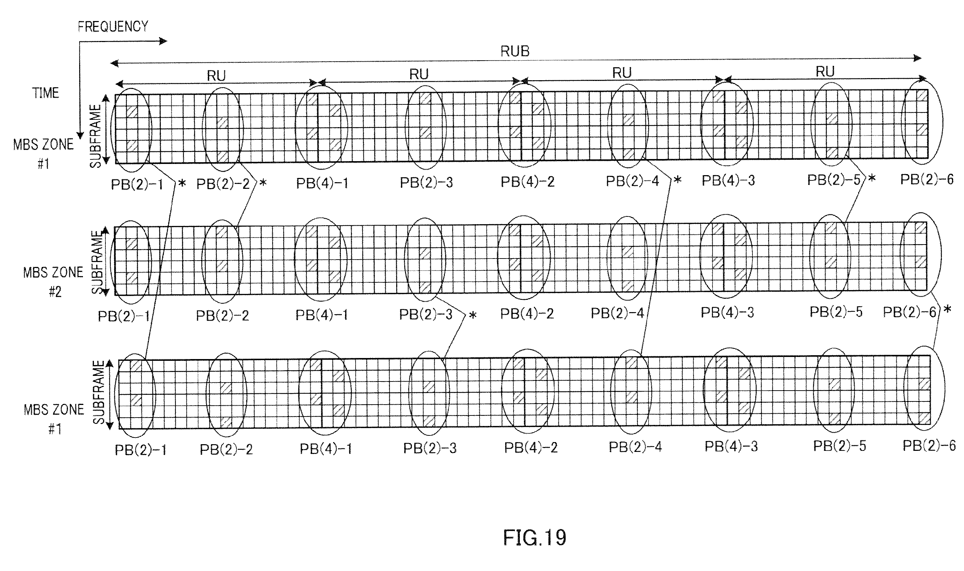

FIG.19 shows an example of partially interlacing the pilot symbol, applied to the RUB shown in FIG.9.

As shown in FIG.16 and FIG.17, for example, [1, 1] is allocated to PB(2)-1, as the orthogonal code sequence common in MBS zone #1 and MBS zone #3. Therefore, cyclic interlaced arrangement in the frequency direction or the time direction is formed in the pilot block, being the arrangement of the pilot pattern included in pilot block PB(2)-1 of MBS zone #1 and MBS zone #3. FIG.19 shows an example in which a pilot signal is cyclically shifted in MBS zone #3 in the positive time and frequency directions, by a portion of one OFDM symbol.

Thus, the interference between MBS zone #1 and MBS zone #3 can be reduced, by interlacing the pilot symbols arranged in the same frequency and time resource in PB(2)-1, so as not to collide with each other between MBS zone #1 and MBS zone #3.

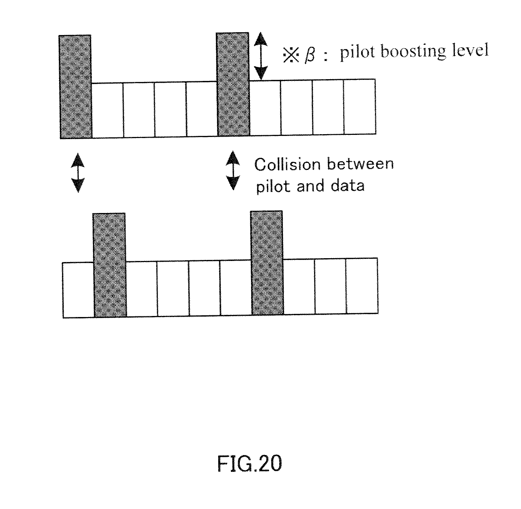

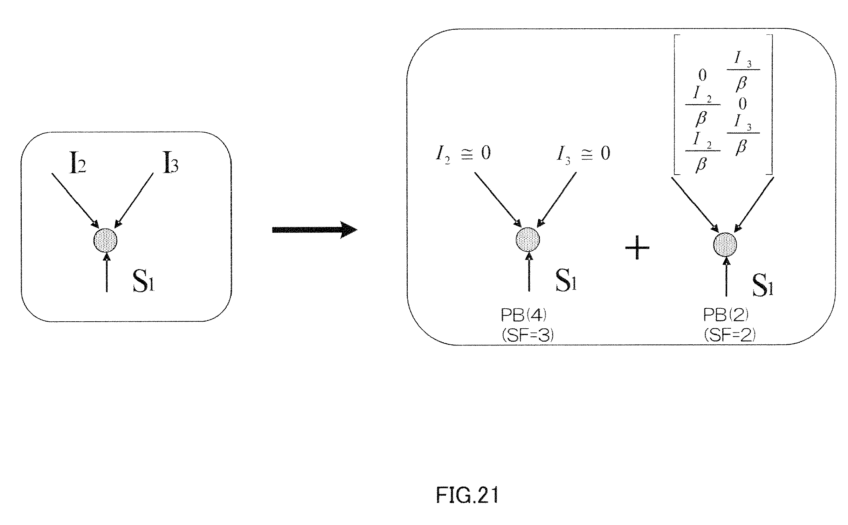

FIG.20 and FIG.21 are views for explaining the application effect of the zone-specific pilot according to this embodiment.

FIG.20 is a view showing a power level of the pilot symbols when the pilot symbols are interlaced between zones as described above. In FIG.20, a horizontal axis shows the frequency, and a vertical axis shows the power level of each pilot symbol. In FIG.20, $\beta$ indicates a pilot boosting power (power ratio of pilot symbols, with respect to the power of data symbols)

In FIG.21, S1 indicates a desired signal power in the terminal positioned in MBS zone #1, and I2 and I3 indicate each interference power from MBS zone #2 and MBS zone #3.

For example, as shown in FIG.19, the magnitude of the interference power is considered, when the total number (12) of pilots included in each of the PB(2) and PB(4) is same.

When the inter-zone common pilot configuration is applied, MBS zone #1 receives the interference from all 48 ($=24 \times 2$) pilot symbols included in the RUB of adjacent MBS zone #2 and MBS zone #3.

Meanwhile, when the zone-specific pilot configuration of this embodiment is applied, sufficient interference suppression characteristic can be obtained because SFPB(4) $\geq$ NI+1=3 is satisfied in PB(4) similarly to Embodiment 2, and MBS zone #1 does not receive interference from adjacent MBS zone #2 and MBS zone #3, and the magnitude of the interference power is regarded as approximately 0.

Further, in PB(2), as shown in FIG.16, the pattern of the orthogonal code sequence allocated to pilot blocks PB(2)-1 and PB(2)-4 of MBS zone #1 is same as the pattern of the orthogonal code sequence allocated to pilot blocks PB(2)-1 and PB(2)-4 of MBS zone #3. However, unlike Embodiment 2, although the pattern of the orthogonal code sequence allocated to pilot blocks PB(2)-1 and PB(2)-4 of MBS zone #1 and MBS zone #3 is same, as shown in FIG. 19, the position of the time axial direction of the arranged pilot symbols is interlaced so as to be overlapped in MBS zone #1 and MBS zone #3. Thus, in pilot blocks PB(2)-1 and PB(2)-4, collision of the pilot symbols between MBS zone #1 and MBS zone #3, can be avoided, thus making it possible to reduce the interference power, by a portion of the pilot-boosted power. As a result, the interference power Ik from other zone can be reduced to 1/3 ($\beta$). As described above, $\beta$ indicates a pilot-boosting power, and when satisfying $\beta > 2$, further improved interference suppression effect can be obtained, compared with Embodiment 2.

As described above, by variably allocating the orthogonal code to each pilot block in the frequency direction, and further by partially forming the interlaced arrangement of the pilot symbols between zones in which the inter-zone interference remains, the interference suppression effect can be further improved, compared with Embodiment 2.

Next, the configuration of the base station and the terminal according to this embodiment will be described.

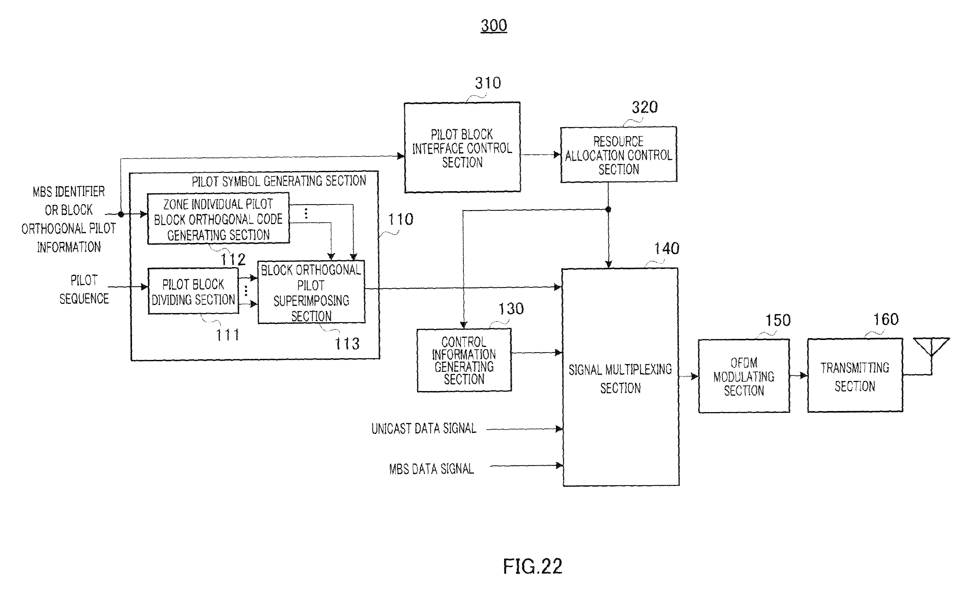

FIG.22 shows the configuration of a principle part of the base station according to this embodiment. Note that in the base station according to this embodiment shown in FIG.22 the same signs and numerals are assigned to a component in common with FIG.13, and explanation therefore is omitted. Base station 300 of FIG.22 includes resource allocation control section 320 instead of resource allocation control section 120 of the base station 100 of FIG.13, and further includes pilot block interlace control section 310 in addition.

Pilot block interlace control section 310 determines MBS identifier (or block orthogonal pilot information) s, and determines the pilot block for forming the interlaced arrangement based on the pilot block number n in the pilot group, and outputs the obtained information to resource allocation control section 320.

Specifically, when mod(n-s, SFPB(Npb)+1)$\neq$0 is established, pilot block interlace control section 310 further determines as follows: partial interlaced arrangement is formed, in the n-th pilot block PB(Npb)-n of pilot block group PB(Npb) of the (Nz+s)-th MBS zone, satisfying mod(n-s, SFPB(Npb)+1)=1 or 2. Thus, when mod(n-s, SFPB(Npb)+1) $\neq$0 is established, the pilot symbol, on which same SFPB(Npb){1} is superimposed, is interlaced in the time axial direction by block orthogonal pilot superimposing section 113, and arranged in a different time resource. Accordingly, the interference power can be reduced.

Note that an interlacing method by pilot block interlace control section 310 is not limited to the aforementioned method, and other method may be used, and pilot block interlace control section 310 may interlace the pilot symbols on which same SFPB(Npb){1} is superimposed, between MBS zones.

Resource allocation control section 320 further applies processing of interlaced arrangement control to the pilot block, based on the information of the pilot block for forming the interlaced arrangement.

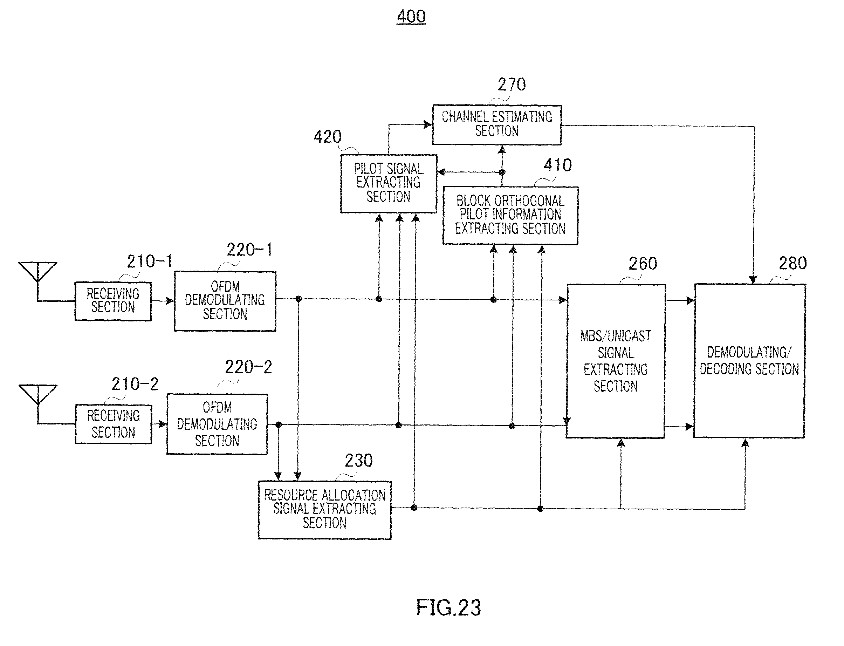

FIG.23 shows the configuration of the principle part of the terminal according to this embodiment. Note that in the terminal of this embodiment shown in FIG.23, the same signs and numerals are assigned to a component in common with FIG.14, and explanation therefore is omitted. Terminal 400 of FIG.23 includes block orthogonal pilot information extracting section 410 and pilot signal extracting section 420, instead of block orthogonal pilot information extracting section 250 and pilot signal extracting section 240 of the terminal 200 shown in FIG.14.

In addition to the processing of block orthogonal pilot information extracting section 250, similarly to the pilot block interlace control section 310, block orthogonal pilot information extracting section 410 specifies the interlaced pilot block based on the MBS identifier (or block orthogonal pilot information) s, and the pilot block number n in the pilot group, and outputs the obtained information to pilot signal extracting section 420.

In addition to the processing of pilot signal extracting section 240, pilot signal extracting section 420 extracts the pilot symbol based on the information of the interlaced pilot block.

As described above, according to this embodiment, the pilot symbol multiplied by the same orthogonal code sequence is interlaced between MBS zones, in the subblock allocated to the same frequency band between MBS zones. Thus, the pilot symbols arranged in the same frequency and time resource, do not collide with each other. Therefore, inter-MBS zone interference can be reduced.

(Embodiment 4)

Embodiment 1 to Embodiment 3 describe a case that the MBS transmission is carried out, using a single subframe.

This embodiment also describes the zone-specific pilot configuration capable of improving the interference suppression characteristic, even in a case that the MBS transmission is carried out using multiple subframes.

[Zone-specific pilot configuration method]

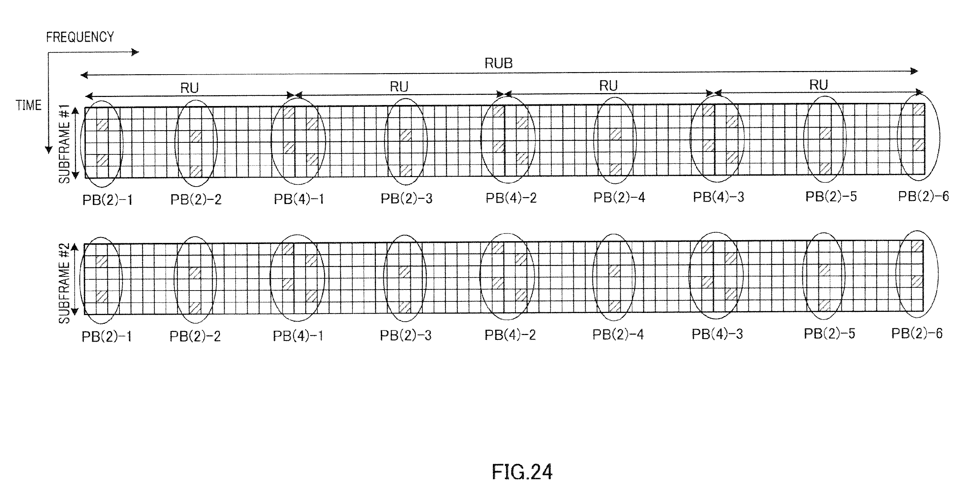

FIG.24 shows an example of the RUB according to this embodiment. FIG.24 shows an example of a case that two subframes are set as units for allocating the communication resource at the time of MBS transmission.

As shown in FIG.24, in this embodiment as well, similarly to the aforementioned each embodiment, the pilot symbols dispersed and arranged in RUB are divided into multiple pilot blocks, based on correlative bandwidth Bc [Hz] calculated from the delay spread on the edge of the MBS zone estimated in the propagation path for estimated MBS SFN transmission.

Then, the orthogonal code having a length corresponding to the number of pilot symbols included in pilot block PB(Npb)-n in the same frequency band is allocated to temporally successive subframe #1 and subframe #2. Also, the orthogonal code sequence is superimposed on the pilot symbol included in pilot block PB(Npb)-n in the same frequency band, over temporally successive subframe #1 and subframe #2.

Namely, the orthogonal code having a further long orthogonal code length is allocated to the pilot symbol included in pilot block PB(Npb)-n of subframe #1, and the pilot symbol included in pilot block PB(Npb)-n of subframe #2 which is continuous from pilot block PB(Npb)-n of subframe #1.

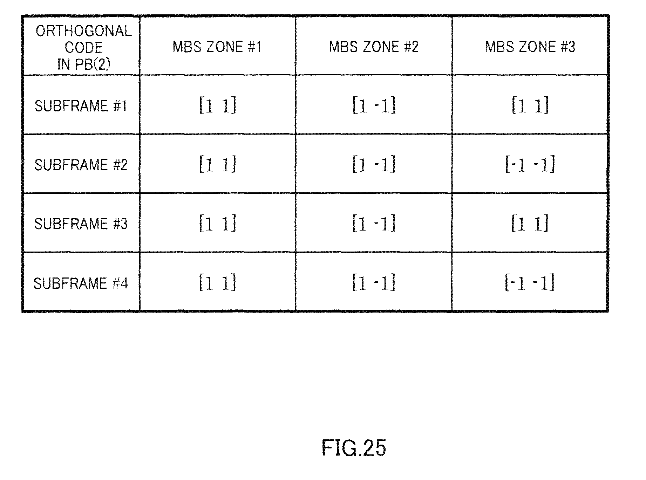

FIG.25 shows an example of a case that the orthogonal codes are allocated to each of the two temporally successive two subframes shown in FIG.24. In the example shown in FIG.25, similarly to Embodiment 1, the orthogonal code having a length of 2 (SF = 2) is allocated to the pilot block included in PB(2) of subframe #1. Further, in this embodiment, the orthogonal code (Walsh code having a length of 4 (SF = 4) is allocated to the pilot block included in PB(2) of subframes #1 and #2.

Further, in the example shown in FIG.25, when the communication resource is allocated successively even after subframe #3, the orthogonal code allocated to the pilot block of subframes #1 and #2 is repeatedly allocated thereto, in the cycle of two subframes.

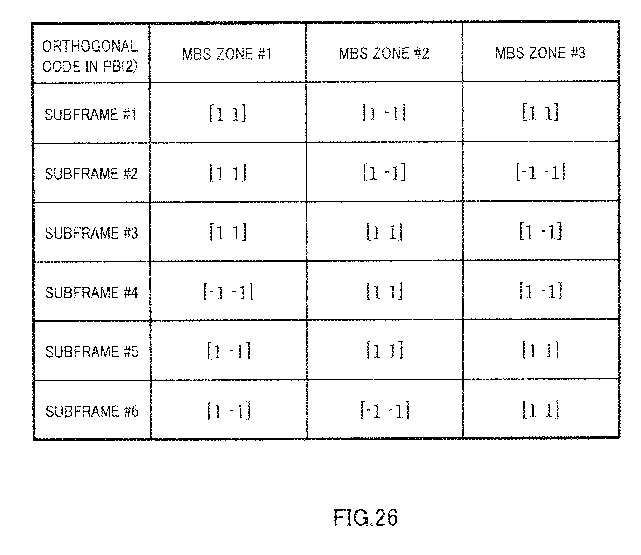

When the communication resource is successively allocated even after subframe #3, the orthogonal code allocated to subframes #1 and #2, may be allocated thereto in the cycle of two subframes between MBS zones, FIG.26 shows an example of the allocation of the orthogonal code when it is allocated variably in the cycle of two subframes.

Further, the inter-MBS zone-specific orthogonal code may be variably allocated, to each pilot block of pilot block group PB(2).

[Superimposition method #4 of the orthogonal code]

The orthogonal codes are allocated to the pilot blocks in a range of the same frequency, with the (2k-1)-th and 2k-th two successive subframes as units. Namely, orthogonal codes having an orthogonal code length SFPB(2Npb) corresponding to the pilot symbol number 2Npb are allocated to pilot symbol PPB(Npb)-n(m) over the (2k-1)-th and 2k-th two successive subframes, in the n-th pilot block PB(Npb)-n of pilot block group PB(Npb). Here, m=1, ..., 2Npb. Further, k=1, ..., Nsf. Nsf indicates the number of MBS resource-allocated subframes.

Thus, the interference suppression effect between MBS zones can be further improved by allocating the orthogonal code having a further long orthogonal code length, to the pilot symbols included in pilot block PB(Npb)-n of subframe #1 and pilot block PB(Npb)-n of subframe #2 continuous from pilot block PB(Npb)-n of subframe #1.

[Superimposition method #4-1 of the orthogonal code]

Similarly to [Superimposition method #4], the orthogonal codes over the pilot blocks located at the same frequency positions, are allocated to the (2k-1)-th and 2k-th two successive units of subframes. Namely, the orthogonal code having an orthogonal code length of SFPB(2Npb) corresponding to pilot symbol number 2Npb is allocated to pilot symbol PPB(Npb)-n(m) over the (2k-1)-th and 2k-th two successive sub-fames in the n-th pilot block PB(Npb)-n of pilot block group PB(Npb). Here, m=1, ..., 2Npb. Further, k=1, ..., Nsf. Note that Nsf is the MBS resource-allocated number of subframes.

Further, the orthogonal code sequence is allocated to pilot symbol PPB(Npb)-n(m) as follows. Note that explanation will be given hereinafter, limited to a case of PB(2), NI=2.

Specifically, the following orthogonal code sequence SFPB(Npb){j} is respectively allocated to the n-th pilot block PB(Npb)-n of pilot block group PB(Npb), namely to the Nz-th to the (Nz+NI)-th MBS zone (MBS identifier) which are close together, based on the block orthogonal pilot information or the MBS identifier.

Specifically, the orthogonal codes are allocated to the (Nz+s)-th (s=0, 1, 2) MBS zone (MBS zone #Nz+s), in accordance with equation 5-1 to equation 5-3.

$$[5]$$

$$SFPB(2Npb)\{1\} \quad --- \quad mod(n\text{-}s, SFPB(Npb)+1)=1 \dots (Equation\ 5\text{-}1)$$

$$SFPB(2Npb)\{2\} \quad --- \quad mod(n\text{-}s, SFPB(Npb)+1)=2 \dots (Equation\ 5\text{-}2)$$

$$SFPB(2Npb)\{3\} \quad --- \quad mod(n\text{-}s, SFPB(Npb)+1)=0 \dots (Equation\ 5\text{-}3)$$

$$When\ SFPB(2Npb)=4,$$

$$SF4\{1\}=[1,\ 1,\ 1,\ 1],$$

$$SF4\{2\}=[1,\ 1,\ -1,\ -1],$$

$$SF4\{3\}=[1,\ -1,\ 1,\ -1],$$

$$SF4\{4\}=[1,\ -1,\ -1,\ 1]$$

are allocated to pilot block PB(Npb)-n, in accordance with the aforementioned equation 5-1 to equation 5-3.

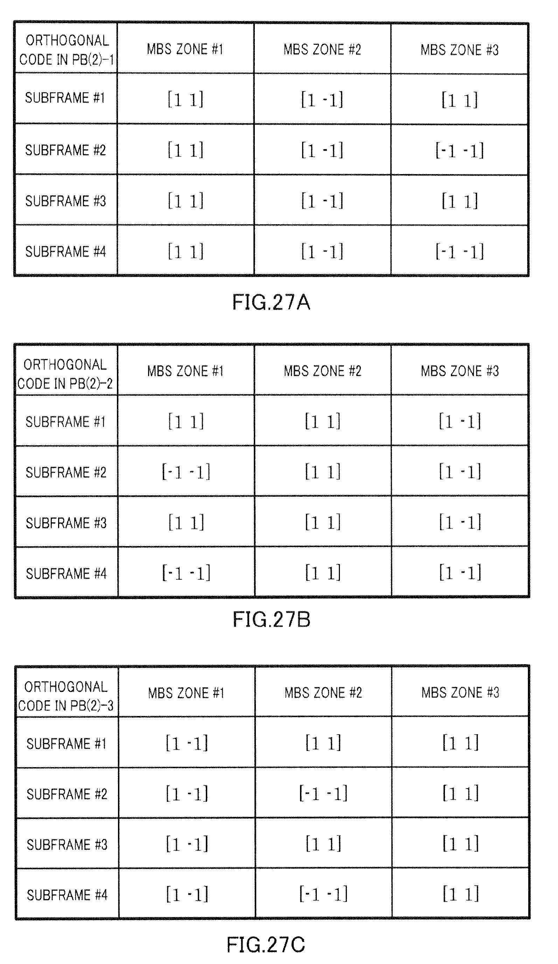

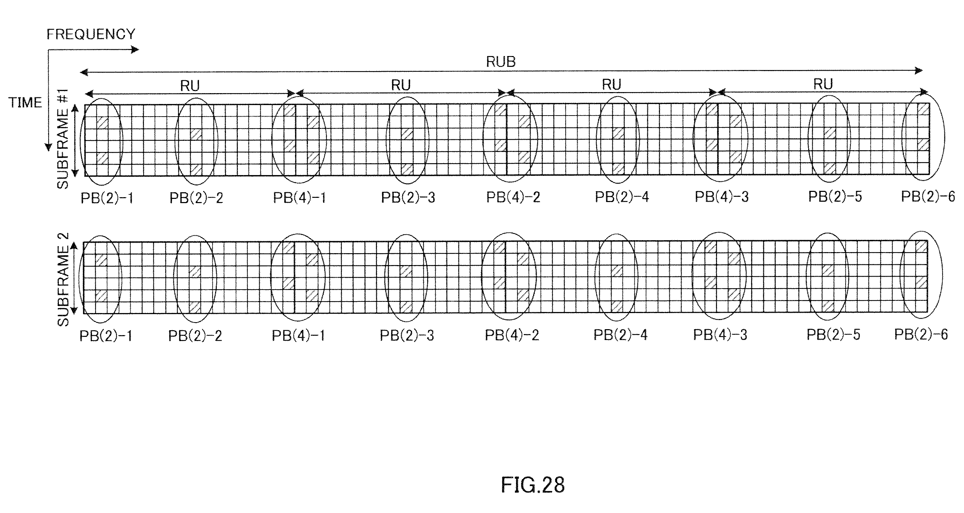

FIG.27A, FIG.28B, and FIG.27C show examples of allocating the orthogonal codes to pilot blocks PB(2)-1, PB(2)-2, PB(2)-3 in the RUB shown in FIG.24.

Note that the orthogonal codes are variably allocated to PB(2)-4 and thereinafter similarly, between MBS zones cyclically. Thus, by allocating the orthogonal codes thereto, an influence of the inter-zone interference can be made uniform between MBS zones similarly to Embodiment 2, even in a case that RUB of an odd number of subframes is set as a unit of resource allocation at the time of MBS data transmission.

(Embodiment 5)

In this embodiment, explanation will be given for the zone-specific pilot configuration capable of further improving the channel estimation accuracy when the MBS transmission is carried out using multiple subframes.

[Zone-specific pilot configuration method]

FIG.28 shows an example of RUB according to this embodiment. FIG.28 shows an example of a case that two subframes are set as units of the resource allocation at the time of MBS transmission.
As shown in FIG.28, in this embodiment as well, similarly to the aforementioned each embodiment, the pilot symbols dispersed and arranged in RUB, are divided into multiple pilot blocks, based on the correlative bandwidth Bc [Hz] calculated from the delay spread on the edge of the MBS zone estimated in the propagation path for the estimated MBS SFN transmission.
Then the orthogonal codes are allocated, each orthogonal code having a length corresponding to the number of pilot symbols included in pilot block PB(Npb)-n located at the same frequency positions, over temporally successive subframe #1 and subframe #2. Then, the orthogonal code sequence is superimposed on the pilot symbols included in pilot block PB(Npb)-n located at the same frequency positions.

[Superimposition method #5 of the orthogonal code]

The orthogonal codes are allocated to two or more successive subframes, over the pilot blocks located at the same frequency positions. Namely, orthogonal code SFPB(2Npb) is allocated to pilot symbol PPB(Npb)-nk(m) in the n-th pilot block PB(Npb)-n of pilot block group PB(Npb) in the k-th subframe, the orthogonal code having not more than a double length of the pilot symbol number Npb in the pilot block. Here, m=1, ... , Npb.
In this embodiment, the orthogonal code sequence superimposed on pilot symbol PPB(Npb)-n(m) is allocated as follows. Note that explanation will be given hereinafter for a case that the orthogonal code is allocated to PB(2), here NI=2, SFPB(2Npb)=3.
Here, the following orthogonal code sequence SFPB(Npb){j} is allocated to the n-th pilot block PB(Npb)-n of pilot block group PB(Npb), namely to the Nz-th to (Nz+NI)-th MBS zone (MBS identifier) which are close together, then, the orthogonal code is superimposed on the pilot symbols.
Namely, the orthogonal code is allocated to the (Nz+s)-th (s=0, 1, 2) MBS zone (MBS zone #Nz + s), in accordance with equation 6-1.

$$[6]$$

$$SFPB(2Npb)\{s+1\}[m]=exp[i\ (NPB(k-1)+m)\ p(s)]\ldots\ (Equation\ 6\text{-}1)$$

Here, p(1)=0, p(2)=2π/3, p(3)=4π/3.

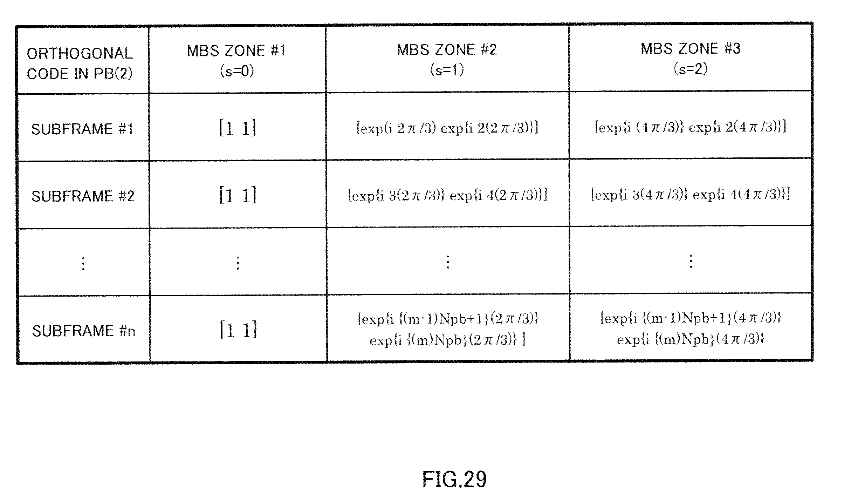

FIG.29 shows an example of a case that the orthogonal codes are allocated to pilot block PB(Npb)-n of subframe #1, and are allocated to pilot block PB(Npb)-n of subframe #2 which is continuous from pilot block PB(Npb)-n.
Thus, by sequentially and cyclically multiplying the orthogonal code sequence by the pilot symbols included in the subblock (pilot block located at the same frequency position) extending over temporarily continuous subframes and allocated to the same frequency band, the orthogonal codes can be averaged over multiple subframes. Therefore, the channel estimation accuracy using pilot symbol Positioned on the edge of the pilot block can be improved.
Note that even in a case that the number of pilot symbols in the pilot block are not a multiple of the orthogonal code length of the allocated orthogonal code, by continuously superimposing the orthogonal code similarly on the pilot block of a subsequent subframe, the channel estimation accuracy using pilot symbol Positioned on the edge of the subframe of the pilot block, can be improved.
In the description above, the MBS transmission is carried out, with the resource unit block (RUB) composed of multiple (M) resource units, set as a minimum unit. However, the present invention is not limited thereto. For example, the present invention may also be applied to a case that the MBS transmission is carried out, with the resource unit set as one.
Note that in the aforementioned embodiment, although explanation has been given using an antenna, the present invention is also applied to a case that an antenna port is used.

The antenna port indicates a theoretical antenna composed of one or a plurality of physical antennas. Namely, the antenna port is not necessarily limited to one physical antenna, and indicates an array antenna compose of a plurality of antennas.

For example, 3GPP LTE does not define how many physical antennas are used to configure the antenna port, but defines a minimum unit capable of transmitting a reference signal of a different base station.

Further, the antenna port is sometimes defined as a minimum unit for multiplication of weighting of a precoding vector.

Also, although cases have been described with the above embodiment as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Applications No.2009-086519, filed on March 31, 2009, including the specification, drawing, and abstract, is incorporated herein by reference in its entirety.

Industrial Applicability

The present invention provides a base station apparatus, a terminal apparatus, a pilot transmission method, and a channel estimation method capable of obtaining improved inter-zone interference suppression characteristics even in a propagation path of low frequency correlation at the time of MBS SFN transmission, and capable of ensuring high channel estimation accuracy. Therefore, the base station apparatus, the terminal apparatus, the pilot transmission method, and the channel estimation method of the present invention are useful in a wireless communication system utilizing MBS.

Reference Signs List

    100, 300 Base station
    110 Pilot symbol generating section
    111, 272 Pilot block dividing section
    112, 271 Zone-specific pilot block orthogonal code generating section
    113 Block orthogonal pilot superimposing section
    120, 320 Resource allocation control section
    130 Control information generating section
    140 Signal multiplexing section
    150 OFDM modulating section
    160 Transmitting section
    200, 400 Terminal
    210-1, 210-2 Receiving section
    220-1, 220-2 OFDM demodulating section
    230 Resource allocation information extracting section
    240, 420 Pilot signal extracting section
    250, 410 Block orthogonal pilot information extracting section
    260 MBS/unicast signal extracting section
    270 Channel estimating section
    273 Transmission pilot symbol generating section
    274 Block orthogonal pilot separating section
    275 Channel estimation interpolating section
    280 Demodulating/decoding section

310 Pilot block interlace control section

**Claims**

1. A base station apparatus, comprising:

a pilot symbol generation section that generates a pilot sequence by dividing a minimum resource unit, being a minimum unit for allocating a communication resource at the time of multicast and broadcast service transmission, into a plurality of subblocks based on a correlative bandwidth corresponding to a delay spread of a propagation path in a multicast and broadcast service zone, and multiplying a pilot symbol included in each of the subblocks by an orthogonal code sequence having a length corresponding to the number of pilot symbols included in each of the subblocks as a code length; and
a transmission section that transmits the pilot sequence thus generated.

2. The base station apparatus according to claim 1, wherein allocation of the orthogonal code sequence is determined based on a multicast and broadcast service identifier.

3. The base station apparatus according to claim 1, wherein allocation of the orthogonal code sequence is determined based on inter-multicast and broadcast service specific pilot configuration information.

4. The base station apparatus according to claim 1, wherein the pilot symbol generation section multiplies the orthogonal code sequence having same code length and different pattern, into a first subblock, and a second subblock closest to the first subblock in a frequency direction and having the number of pilot symbols included in the subblock same as that of the first subblock.

5. The base station apparatus according to claim 1, further comprising an interlace section that forms an interlaced arrangement of pilot symbols multiplied by the same orthogonal code sequence, in the subblock allocated to the same frequency band between the multicast and broadcast service zones.

6. The base station apparatus according to claim 1, wherein the pilot symbol generation section multiplies the pilot symbols included in the subblock allocated to the same frequency band over the temporally continuous minimum resource unit, by the orthogonal code sequence having a length corresponding to a total number of pilot symbols included in the subblock allocated to the same frequency band over the temporally continuous minimum resource unit, as the code length.

7. The base station apparatus according to claim 1, wherein the pilot symbol generation section multiplies the pilot symbols included in the subblock by sequentially cycling the orthogonal code sequence.

8. The base station apparatus according to claim 6, wherein the pilot symbol generation section multiplies the pilot symbols included in the subblock allocated to the same frequency band over the temporally continuous minimum resource unit by sequentially cycling the orthogonal code sequence.

9. The base station apparatus according to claim 6, wherein the orthogonal code sequence is Walsh orthogonal code sequence.

10. A terminal apparatus, comprising:

a reception section that receives a pilot sequence generated by dividing a minimum resource unit, being a minimum unit of resource allocation at the time of multicast and broadcast service transmission, into a plurality of subblocks, based on a correlative bandwidth corresponding to a delay spread of a propagation path in a multicast and broadcast service zone, and multiplying the pilot symbols included in each of the subblocks, by an orthogonal code sequence having a length corresponding to the number of pilot symbols included in each of the subblocks as a code length; and
a channel estimation section that estimates channels using the pilot sequence.

11. A pilot transmission method, comprising:

dividing a minimum resource unit, being a minimum unit of resource allocation at the time of multicast and broadcast service transmission, into a plurality of subblocks, based on a correlative bandwidth corresponding to a delay spread of a propagation path in a multicast and broadcast service zone; and

multiplying the pilot symbols included in each of the subblocks, by an orthogonal code sequence having a length corresponding to the number of pilot symbols included in the subblock as a code length.

12. A channel estimation method, comprising:

dividing a minimum resource unit, being a minimum unit of resource allocation at the time of multicast and broadcast service transmission, into a plurality of subblocks, based on a correlative bandwidth corresponding to a delay spread of a propagation path in a multicast and broadcast service zone;

multiplying the pilot symbols included in each of the subblocks, by an orthogonal code sequence having a length corresponding to the number of pilot symbols included in the subblock as a code length; and

estimating channels by using the pilot sequence.

MBS ZONE #1

MBS ZONE #2

MS

MBS ZONE #3

INTERFERENCE
BETWEEN MBS ZONES

: BS

FIG.1

FIG.2

FIG.3

FREQUENCY

TIME

MBS ZONE #1

SUBFRAME

RU

▨ ···PILOT SYMBOL

☐ ···DATA
OR CONTROL SIGNAL SYMBOL

FIG.4

EP 2 416 510 A1

2x2 SFBC, QPSK R=1/2 、120km/h
Pilot boosting : 5dB
MBSFN channel model:
ISD 1.5km (Delay spread:1.93 $\mu$ sec )

FIG.5

| INTER-ZONE INTERFERENCE | RECEPTION PERFORMANCE |
|---|---|
| HEAVY INTERFERENCE ( $\Delta$ I=6dB, 9dB ) | (1) ORTHOGONAL PILOT<br>(2) INTERLACED PILOT |
| LIGHT INTERFERENCE ( $\Delta$ I=12dB, 15dB ) | (1) INTERLACED PILOT<br>(2) ORTHOGONAL PILOT |

FIG.6

FIG.7

FIG.8

FIG.9

FIG.10

INTER-MBS ZONE-SPECIFIC
PILOT CONFIGURATION

K bits

N bits

MBS IDENTIFIER

INTER-MBS ZONE-SPECIFIC
PILOT CONFIGURATION

K bits

N bits

MBS IDENTIFIER

FIG.11

EP 2 416 510 A1

| K (2 BITS) | INTER-ZONE-SPECIFIC PILOT CONFIGURATION |
|---|---|
| 01 | INTER-ZONE-SPECIFIC PILOT CONFIGURATION APPLIED (ORTHOGONAL CODE SEQUENCE #1) |
| 10 | INTER-ZONE-SPECIFIC PILOT CONFIGURATION APPLIED (ORTHOGONAL CODE SEQUENCE #2) |
| 11 | INTER-ZONE-SPECIFIC PILOT CONFIGURATION APPLIED (ORTHOGONAL CODE SEQUENCE #3) |
| 00 | INTER-ZONE-SPECIFIC PILOT CONFIGURATION NOT APPLIED |

FIG.12

FIG.13

## 200

FIG.14

EP 2 416 510 A1

FIG.15

EP 2 416 510 A1

| PILOT BLOCK NO. | MBS ZONE #1 | MBS ZONE #2 | MBS ZONE #3 |
|---|---|---|---|
| PB(2)-1 | [1 1] | [1 -1] | [1 1] |
| PB(2)-2 | [1 1] | [1 1] | [1 -1] |
| PB(2)-3 | [1 -1] | [1 1] | [1 1] |
| ⋮ | ⋮ | ⋮ | ⋮ |

FIG.16

FIG.17

FIG.18

FIG.19

FIG.20

$I_2$    $I_3$

$S_1$

$I_2 \cong 0$    $I_3 \cong 0$

$$\begin{bmatrix} 0 & \dfrac{I_3}{\beta} \\ \dfrac{I_2}{\beta} & 0 \\ \dfrac{I_2}{\beta} & \dfrac{I_3}{\beta} \end{bmatrix}$$

$S_1$     +     $S_1$

PB(4)         PB(2)
(SF=3)       (SF=2)

FIG.21

EP 2 416 510 A1

FIG.22

270

CHANNEL ESTIMATING
SECTION

420

PILOT SIGNAL
EXTRACTING
SECTION

410

BLOCK ORTHOGONAL
PILOT INFORMATION
EXTRACTING SECTION

210-1          220-1

RECEIVING
SECTION

OFDM
DEMODULATING
SECTION

260                280

210-2          220-2

RECEIVING
SECTION

OFDM
DEMODULATING
SECTION

MBS/UNICAST
SIGNAL
EXTRACTING
SECTION

DEMODULATING/
DECODING SECTION

230

RESOURCE ALLOCATION
SIGNAL EXTRACTING
SECTION

FIG.23

EP 2 416 510 A1

EP 2 416 510 A1

FREQUENCY

TIME

RUB

RU RU RU RU

SUBFRAME #1

PB(2)-1  PB(2)-2  PB(4)-1  PB(2)-3  PB(4)-2  PB(2)-4  PB(4)-3  PB(2)-5  PB(2)-6

SUBFRAME #2

PB(2)-1  PB(2)-2  PB(4)-1  PB(2)-3  PB(4)-2  PB(2)-4  PB(4)-3  PB(2)-5  PB(2)-6

FIG.24

| ORTHOGONAL CODE IN PB(2) | MBS ZONE #1 | MBS ZONE #2 | MBS ZONE #3 |
|---|---|---|---|
| SUBFRAME #1 | [1 1] | [1 -1] | [1 1] |
| SUBFRAME #2 | [1 1] | [1 -1] | [-1 -1] |
| SUBFRAME #3 | [1 1] | [1 -1] | [1 1] |
| SUBFRAME #4 | [1 1] | [1 -1] | [-1 -1] |

FIG.25

| ORTHOGONAL CODE IN PB(2) | MBS ZONE #1 | MBS ZONE #2 | MBS ZONE #3 |
|---|---|---|---|
| SUBFRAME #1 | [1 1] | [1 -1] | [1 1] |
| SUBFRAME #2 | [1 1] | [1 -1] | [-1 -1] |
| SUBFRAME #3 | [1 1] | [1 1] | [1 -1] |
| SUBFRAME #4 | [-1 -1] | [1 1] | [1 -1] |
| SUBFRAME #5 | [1 -1] | [1 1] | [1 1] |
| SUBFRAME #6 | [1 -1] | [-1 -1] | [1 1] |

FIG.26

| ORTHOGONAL CODE IN PB(2)-1 | MBS ZONE #1 | MBS ZONE #2 | MBS ZONE #3 |
|---|---|---|---|
| SUBFRAME #1 | [1 1] | [1 -1] | [1 1] |
| SUBFRAME #2 | [1 1] | [1 -1] | [-1 -1] |
| SUBFRAME #3 | [1 1] | [1 -1] | [1 1] |
| SUBFRAME #4 | [1 1] | [1 -1] | [-1 -1] |

FIG.27A

| ORTHOGONAL CODE IN PB(2)-2 | MBS ZONE #1 | MBS ZONE #2 | MBS ZONE #3 |
|---|---|---|---|
| SUBFRAME #1 | [1 1] | [1 1] | [1 -1] |
| SUBFRAME #2 | [-1 -1] | [1 1] | [1 -1] |
| SUBFRAME #3 | [1 1] | [1 1] | [1 -1] |
| SUBFRAME #4 | [-1 -1] | [1 1] | [1 -1] |

FIG.27B

| ORTHOGONAL CODE IN PB(2)-3 | MBS ZONE #1 | MBS ZONE #2 | MBS ZONE #3 |
|---|---|---|---|
| SUBFRAME #1 | [1 -1] | [1 1] | [1 1] |
| SUBFRAME #2 | [1 -1] | [-1 -1] | [1 1] |
| SUBFRAME #3 | [1 -1] | [1 1] | [1 1] |
| SUBFRAME #4 | [1 -1] | [-1 -1] | [1 1] |

FIG.27C

45

FIG.28

EP 2 416 510 A1

| ORTHOGONAL CODE IN PB(2) | MBS ZONE #1 (s=0) | MBS ZONE #2 (s=1) | MBS ZONE #3 (s=2) |
|---|---|---|---|
| SUBFRAME #1 | [1 1] | [exp(i 2$\pi$/3) exp{i 2(2$\pi$/3)}] | [exp{i (4$\pi$/3)} exp{i 2(4$\pi$/3)}] |
| SUBFRAME #2 | [1 1] | [exp{i 3(2$\pi$/3)} exp{i 4(2$\pi$/3)}] | [exp{i 3(4$\pi$/3)} exp{i 4(4$\pi$/3)}] |
| ⋮ | ⋮ | ⋮ | ⋮ |
| SUBFRAME #n | [1 1] | [exp{i {(m-1)Npb+1}(2$\pi$/3)} exp{i {(m)Npb}(2$\pi$/3)} ] | [exp{i {(m-1)Npb+1}(4$\pi$/3)} exp{i {(m)Npb}(4$\pi$/3)} |

FIG.29

## INTERNATIONAL SEARCH REPORT

| International application No. |
|---|
| PCT/JP2010/002231 |

**A. CLASSIFICATION OF SUBJECT MATTER**
*H04J11/00*(2006.01)i, *H04B1/707*(2006.01)i

According to International Patent Classification (IPC) or to both national classification and IPC

**B. FIELDS SEARCHED**

Minimum documentation searched (classification system followed by classification symbols)
H04J11/00, H04B1/707

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Takaaki KISHIGAMI et al., 'Change Request for the multiplexing scheme for E-MBS Zone Specific Pilot in 802.16m SDD', IEEE, 2009.02.27, <URL: http://grouper.ieee.org/groups/802/16/tgm/ contrib/C80216m-09_0417r1.doc> | 1-12 |
| A | Lei Huang et al., 'Discussion on MIMO Spatial Multiplexing For E-MBS', IEEE, 2008.03.10, <URL: http://www.ieee802.org/16/tgm/contrib/C80216m-08_124.pdf> | 1-12 |
| A | Shu Wang et al., 'Enhance Downlink Positioning in WiMAX', IEEE, 2008.09.05, <URL:http://www. ieee802.org/16/tgm/contrib/C80216m-08_1106.pdf> | 1-12 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 April, 2010 (16.04.10) | 27 April, 2010 (27.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/002231 |

C (Continuation).　DOCUMENTS CONSIDERED TO BE RELEVANT

| Category* | Citation of document, with indication, where appropriate, of the relevant passages | Relevant to claim No. |
| --- | --- | --- |
| A | WO 2008/041546 A1 (Matsushita Electric Industrial Co., Ltd.), 10 April 2008 (10.04.2008), entire text; all drawings & US 2010/0027501 A　　& EP 2068473 A1 | 1-12 |
| P,A | WO 2009/078276 A1 (Sharp Corp.), 25 June 2009 (25.06.2009), entire text; all drawings (Family: none) | 1-12 |

Form PCT/ISA/210 (continuation of second sheet) (July 2009)

**REFERENCES CITED IN THE DESCRIPTION**

**Patent documents cited in the description**

- JP 2009086519 A